(19) Europäisches Patentamt
European Patent Office
Office européen des brevets

(11) **EP 2 717 226 A1**

(12) **EUROPEAN PATENT APPLICATION**

(43) Date of publication:
**09.04.2014 Bulletin 2014/15**

(51) Int Cl.:
***G06T 15/50*** *(2011.01)*

(21) Application number: **12187256.8**

(22) Date of filing: **04.10.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Colors of Eden Gmbh
10961 Berlin (DE)**

(72) Inventors:
• **Palavwala, Jitendrakumar Premvadan
395007 Surat (IN)**

• **Bräuer, Holm
01665 Klipphausen (DE)**

(74) Representative: **Lippert, Stachow & Partner
Patentanwälte
Krenkelstrasse 3
01309 Dresden (DE)**

Remarks:
Amended claims in accordance with Rule 137(2)
EPC.

(54) **Method for generating personalized product views**

(57)     The present invention relates to a method for generating personalized product views from a three-dimensional computer model representing a customizable product, said model comprising a plurality of layers, each layer representing an individually customizable part of the product, each layer of the plurality of layers being assigned at least one attribute, wherein the model is rendered with a rendering machine and the resulting renderings of the model are customized according to a customization request with a post-processing algorithm, said customization request specifying custom attribute values for each attribute of each layer of the plurality of layers.

600a

600d

600ad

= Shadow effect

= Transparency    FIG. 15

EP 2 717 226 A1

## Description

## Technical Field

The present invention relates to a method for generating personalized product views from three dimensional computer models of a customizable product.

## Prior Art

Recently, customers have been demanding semi-customizable products of mass production in order to best meet their individual desires. For example, cars can be configured by the customer with respect to color, wheels, auxiliaries, etc. For the customer it is nice to obtain a visual impression of the product as it will look like before it is actually produced. The customer may be sustained in his decision or otherwise has the opportunity to change the configuration. The same, for example, applies to jewelry.

Three dimensional computer models of a customizable product may be created with a standard 3D CAD (Three Dimensional Computer Aided Design) system like Rhinoceros 3D, 3D Studio Max, Cinema 4d. A 3D CAD model is a complete three-dimensional geometric representation of a customizable product. The product is usually composed out of parts, each of which comprises one or more sub-parts. A 3D CAD model may consist of one or more closed or open 3D objects which may represent corresponding parts of the customizable product. One or more 3D objects can be grouped together to form a layer. A 3D model of a product may have one or more layers, each of which may have one or more 3D objects, representing corresponding parts of the customizable product. It is particularly useful to group similar objects together within a single layer. Specifically, a layer may represent a group of objects that are individually customizable. A part of a product can be made up of different materials, which may carry certain physical properties and corresponding property values. Representations of such physical properties are called "attributes" in 3D CAD system. Each object of a 3D model may be associated with a certain attribute, representing certain kinds of surface and/or volumetric physical properties of the respective part. Each attribute is associated with certain attribute types and corresponding attribute values. Examples of attribute types include, but are not limited to "color", "reflectivity" and "refractivity". Features of existing CAD systems may be used to facilitate the process of assigning attributes to each layer. For example, such CAD systems allow the user to organize different characteristic combinations of attribute types with certain characteristic ranges of permissible values with the help of attributes usually referred as "materials" (e.g., silver, 18k gold, amethyst, diamond). Such materials may be created and assigned to each layer.

A standard CAD system may include one or more rendering engines, which may be used to generate 2D renderings (two dimensional pictures) of the entire 3D CAD model, or of individual layers or of individual objects of the model. Such a rendering engine utilizes the 3D geometry of the model, an attribute assignment as well as a certain "environment" (a computer implemented set of light sources and certain properties) to generate a 2D rendering. A rendering is a rasterized image, i.e. a two dimensional representation of 3D elements (the entire 3D model, the layers within the model, or the objects within the layers), representing the customizable product and/or its parts. A rendering engine stores renderings in various standard image formats (e.g., PNG, TGA, JPEG, HDR, EXR). The HDR and EXR file formats support a highly dynamic range of color values, which carry more color information than standard image formats.

US 8,194,069 B2 relates to a computer system that includes a three-dimensional model of a product, such as a piece of customizable jewelry for making it visible to the customer. The model is divided into multiple layers, each of which contains one or more components of the product. Layers of a ring, for example, are the ring's shank, the ring's head, the center stone, the stones on the shank top and stone on the side of the head. One layer may have more than one component. The stones on the shank top may comprise a plurality of gemstones (components). Each layer is associated with one or more attribute types, each of which is associated with a plurality of possible attribute values. For example, the center stone layer may be associated with the attribute types: stone type, stone carat weight, stone color and quality; attribute values may be amethyst, 1.5ct, bluish red, natural AAA, respectively. The system pre-renders each layer with each possible attribute type and each possible attribute value for that type and layer. The resulting layer renderings may be combined with each other to produce personalized views of the entire product without the need to pre-render all possible combinations of attribute values. Each combination results in a "personalized product view".

Even though, the number of pre-renderings is dramatically reduced in contrast to pre-rendering all possible combinations, the method is inflexible as adding attribute values are as difficult as reproducing such attribute values by means of a render machine which is a time consuming process. Moreover, the number of attributes is finite resulting also in a finite set of potential combinations. For a server-client system, generated layer renderings are getting combined with a layer rendering combiner which sends only the final image to a client. If a new combination is requested, a new re-loading from the server is required.

**Disclosure of the invention**

It is a task of the present invention, to provide methods for generating personalized product views from three-dimensional computer models of a customizable product having a greater flexibility with respect to customization. This objective is achieved with a method according to the independent claim. The dependent claims relate to further aspects of the present invention.

The present invention relates to a method for generating personalized views from a three dimensional computer model of a product, said model comprising a plurality of layers, each layer representing an individually customizable part of the product, each layer of the plurality of layers being assigned, i.e., associated with, at least one attribute, wherein the model is rendered with a rendering machine and the resulting renderings of the model are customized, i.e., modified according to a customization request with a post-processing algorithm, said customization request specifying custom attribute values for each attribute of each layer of the plurality of layers (e.g., by using a plurality of labels).

The process of modifying an existing (source) layer rendering in order to generate another (target) layer rendering will be referred to as "post-processing". Thus, by employing said post-processing, an effective and flexible method of generating images for all or some of the customization alternatives can be established, because modifying renderings with the help of certain image transformation techniques avoids the unnecessary time consuming process of pre-rendering all customization alternatives of a given product or one or more of its parts. Such techniques can, moreover, be exploited to modify entire sets of renderings of a plurality of products with comparable customization alternatives.

One aspect of the present invention relates to producing layer renderings that are post-processed according to a customization request. First, for each customizable layer and its corresponding customizable attribute, an arbitrarily chosen specific permissible attribute value is assigned. Then, renderings are produced for each of the layers of the model, referred herein as "basic layer renderings". After receiving a customization request for a customized rendering of a personalized product, post-processed layer renderings are produced by modifying in a post-processing step the basic layer renderings according to the specified plurality of custom attribute values. The post-processed layer renderings are, in difference to basic layer renderings, true representations of parts of a certain customizable product according to the customization request. For this purpose a post-processor may be employed. A post-processor is a system which: receives a customization request for each layer; and transforms the renderings (basic layer renderings) layer wise into customized renderings (post-processed layer renderings) according to the customization request. Last but not least, the personalized view is composed from the customized renderings by a layer composer system. Said layer composer combines the layer renderings one above another.

One aspect of the present invention relates to producing basic layer renderings by cropping a rendering of the complete 3D model with the help of multi-colored 2D representations of layer's silhouettes. In this aspect of the invention, a render channel (i.e., a true rendering) and a layer-id channel (i.e., a multi-colored 2D representation of layer's silhouettes) are produced, and the layer-id channel is used to crop the said render channel into basic layer renderings.

The effort of producing basic layer renderings may reach its limits, when a product contains too many customizable parts. Creating basic layer renderings for each part separately would require a lot of efforts. To overcome this limit, existing features of rendering engines can be utilized. Multi-pass rendering, for instance, is a process, which renders the lighting, surface or object attributes of a scene as separate images. Multi-pass renderings are 2D rasterized images herein called "channels", which can be generated by a rendering engine, if required. A rendering engine may produce a variety of such channels, for example render, alpha, atmosphere, diffuse, reflection, refraction, GI, or object-id channels. For the present invention, only a render channel and an object-id channel are produced. An object-id channel is a multi-colored 2D representation of the object's silhouettes of a 3D model. If one or more objects are grouped into one layer, the object-id channel consists of a multi-colored 2D representation of the layer's silhouettes rather than of the silhouettes of each individual object of the model. Such a representation will be called a "layer-id channel" herein. A render channel represents a true rendering of a 3D model with respect to a certain attribute assignment. Speaking of "render" and "object-id" channel may be specific to certain commercially available rendering engines. Other software packages may use other titles for such channels.

Layer-id channels can be used to effectively generate sets of basic layer renderings, which reflect various decompositions of a product into individually customizable parts. Each customizable product exhibits a certain "decomposition space", which comprises all possible decompositions of the product into individually customizable parts. Such a decomposition space has a smallest as well as a largest decomposition. If each part of a product is customizable individually, then it will be the largest decomposition. The smallest decomposition has to take into account the materials the product is made of. It is the decomposition, which follows the largest (connected or unconnected) material parts of the product. Some customizable products might have only one decomposition space. In this case, the smallest and largest decomposition are identical. Similar distinctions can be made with respect to decompositions of a model representing a customizable product. The method decomposes a product with the help of grouping the objects of a 3D model into different layers, such that each layer is considered to represent a part of a product, which is individually customizable. Decomposition, therefore, follows layer assignment. Offering another (larger or smaller) decomposition of a product, however, would require a new set of basic layer renderings to be generated. Such efforts can be avoided with the help of layer-id channels.

A layer-id channel can be utilized to decompose a render channel into multiple layer renderings by cropping areas of the render channel according to the colored areas of a corresponding layer-id channel and saving them as separate images. This method can be used to generate basic layer renderings. By exploiting layer-id channels, it is possible to decompose a certain product in many ways, without the need of generating any new set of basic layer renderings or any new render channels. This is an effective way of offering various product decomposition options to the user or customer for customization.

One aspect of this invention relates to using the layer-id channel in order to layer wise customizing the rendered product with the post-processing algorithm by directly manipulating the render channel. An advanced post-processor system can be designed for this purpose in such a way that it is able to manipulate the render channel directly, without the need of generating basic layer renderings at all. An advanced post processing system is a system, which: receives a customization request for each area of a render channel, and post-processes the desired areas of a render channel according to the customization request. Such an advanced system avoids the necessity of producing basic layer renderings, which have to be composed again later on for displaying a personalized product view. An advanced post-processor may be set up to post-process the specific areas of a render channel directly, if it is possible to utilize information about which area of a render channel represents which layer of the model. A layer-id channel represents such kind of information and, therefore, an advanced post-processor, which relies only on a single render channel together with a corresponding layer-id channel representing a specific decomposition of a model, can be set up.

Preferably, a render channel is produced by rendering the model with an assignment of arbitrarily specified attribute values, a layer-id channel is produced, and the layer-id channel is used for layer wise customizing the render channel by directly manipulating the render channel with an advanced post-processor according to the customization request.

A layer-id channel displays the specific areas, which are influenced by various layers of a 3D model, and thereby the various customizable parts of the represented product, with the help of a multi-colored 2D map of layer's silhouettes. Such 2D multi-colored representations can be used to label different areas of a rendering. Instead of assigning labels to the various layers of a model, they can be assigned to colors, representing 2D layer's silhouettes. This way, it is possible to label different (connected or unconnected) areas of a rendering of an entire model or some of its objects. Utilizing such labels, a customization request as an input for an advanced post-processor will have exactly the same format as a customization request utilized by a post-processor described so far. Nevertheless, their function differs, because a reference has been made to different areas of one single rendering instead of referring to different basic layer renderings.

One aspect of this invention relates especially to color-modifications. In this aspect of the invention, the basic layer renderings or the render channel are post-processed by applying transformation algorithms with the help of a table storing values for transformation parameters for each attribute associated with a layer.

The color distributions of a rendering or any 2D picture can be easily exploited by certain color transformation techniques, as long as other surface properties of the product and its environment stay constant for each of the customization alternatives. This is interesting, because often the customer's primary interest lies in customizing the color of a product or of some of its parts. A preferred implementation of the invention might, therefore, consider such transformations, which are (a) confined to examples of products with distinguishable color variants, which (b) exhibit no other visually distinguishable and customizable properties that would influence its color representation in a 2D rendering, and (c) are rendered with a constant environment. The method of generating views of different customization alternatives by modifying 2D representations is, however, generally not limited to such conditions, as there are several methods for recovering some of the three dimensional properties of an object from its 2D representation.

A certain layer of a 3D model (representing one or more parts of a product), which is customizable with respect to its color under the mentioned conditions (a)-(c), can be called a "color customizable layer". A color customizable layer will have many permissible values for the attribute type "color". The method will not assign such permissible values to the respective layer, nor is it necessary to generate renderings based on such assignments. Instead, a certain arbitrarily chosen color value will be assigned, and only a single rendering will be generated based on this value. It is not essential that the chosen value corresponds to a visible property of any of the customization alternatives.

One aspect of this invention relates to using a post-processor for manipulating renderings. Usually, the post-processor is a computer implemented system, which may, for instance, utilize RGB and/or other values of a set of pixels of a rasterized image in order to map them onto different values. Such color transformations, for instance, can be carried out with various algorithms, for example but not limited to colorize, hue, saturation, brightness and contrast transformations. Such color transformation algorithms generate output images, referred herein as "customized renderings". The customized renderings are true representations of parts of a certain customizable product according to a customization demand. The post-processor requires a value for each algorithm, utilizes one or more algorithms (e.g. colorize, hue, saturation, contrast, brightness) and thereby one or more values according to a customization request. Such values can be stored in tables, which include a set of values for a set of algorithms with respect to specific target attributes. Table-1 displays an example of such a table.

| TABLE-1 | | | | | |
|---|---|---|---|---|---|
| **Target Attributes** | **Colorize** | **HUE** | **Saturation** | **Contrast** | **Brightness** |
| **Rose Gold** | +30 | +5 | +/-0 | +/-0 | +/-0 |
| **Ruby** | +20 | +5 | +10 | -5 | +/-0 |
| **Aquamarine** | +10 | -30 | +5 | +5 | -5 |

The values for the post-processing algorithms executed by such a post-processor depend on the choice of the arbitrary attribute values the renderings are generated with. They can be found by experiments with various source and target values. Although only five algorithms and three target attributes are displayed in the table above, the post-processor may carry any number of algorithms, attributes and respective values. The post-processor is an expandable system, such that additional sets of algorithms, values and attributes can be added or removed anytime. The outcome of this is flexibility in defining transformations for almost every possible target attribute without the need of re-rendering anything with a rendering engine.

An advanced post-processor will exploit a table of basic manipulation settings similar to the Table-1 above. Such a table defines which operations have to be performed according to a certain target value for a certain customizable area of the respective render channel. Applying the correct manipulations will result in a final personalized product view, which will be a true representation of a customizable product according to a certain customization demand. An advanced post-processor, therefore, maps desired areas of render channels onto target areas of final personalized product views, modifying the former in order to display a true representation of a customized product.

This method is advantageous especially with respect to expansions of a given customization space, because the table of algorithms utilized by a post-processor can have many entrances of applicable target values; and any such entry can be pre-stored and utilized later on. This results in a flexibility to display almost every possible attribute without the need of re-rendering anything again. As there is no upper limit for storing such entries, the number of customization options has (theoretically) no upper limit for a given set of basic layer renderings (or a given pair of render and layer-id channel).

One aspect of the present invention relates to modifying the basic layer renderings or the render channel with a post-processor by applying special effects like bloom, glare and lens flare to each layer. This will make personalized product views more realistic. A post-processor may carry additional sets of algorithms and corresponding values, which are applied to enhance the appearance of a customizable layer or a customizable area of a render channel.

One aspect of the present invention relates to augmenting the model. The model representing a product may be augmented with optional parts and/or add-ons (additional objects). Some products are expandable and have, therefore, variable parts, which are present only sometimes, i.e. parts that a customer may want to purchase together with the product. It is, therefore, desirable to include such optional parts in the final personalized product view, whenever a customer requests to have such optional parts. 3D objects for such optional parts can be created, and grouped into optional layers within a 3D model. Basic layer renderings of such optional layers can be produced. If it is required to display such an optional part, optional basic layer renderings can be utilized together with the method of layer post-processing and layer composing.

Add-ons are other additional objects that might be required to be displayed together with the product in the final personalized product view. Such add-ons could be objects to be used as a scale to represent the size of the product; or they could be body parts (represented as 3D objects within a CAD system) that can be used to give the customer the possibility to explore the look and feel a certain product such as a piece of jewelry has, if it were worn. Such add-ons can be included as additional objects in the model of the respective product; and they can be handled in exactly the same way as optional parts disclosed above. To save the efforts of displaying different combinations of add-ons within a single view, a dedicated view might be provided instead, which is reserved for showing the product together with the add-on, without providing the same view without the add-ons.

One aspect of the present invention relates to displaying accurate shadow effects in personalized product views. In this aspect of the invention, an additional basic layer rendering representing shadow effects or a render channel with shadow effects is produced by augmenting the model with a 3D object (a ground plane), and wherein a plurality of basic layer renderings are merged or linked, or wherein various areas of a render channel are linked to each other.

Shadows are complex effects of lighting, geometry and certain physical properties of the parts (of the product). Shadow effects are important to be displayed in personalized product views, as shadows are physical phenomena, which add more realism. It is, therefore, desirable to include shadows in the final personalized product views to increase the quality of the visualizations. An additional basic layer rendering can be produced by augmenting the model with a 3D object referred herein as "ground plane".

A ground plane layer, although present in the 3D model, is usually not something considered to be customizable by a customer. The ground plane layer will, however, be affected by customization requests with respect to other layers, representing parts of the product, which cast shadows on the ground plane. The customization of a layer representing a part of the product, which casts a shadow on the ground floor, will affect the representation of the ground plane layer. Such interdependent effects can be accurately displayed in a variety of ways. For example, the layer representing the part of the product, which casts a shadow on the ground floor, and the ground plane layer can be merged into one single layer. In this case, the post-processor utilizes the merged basic layer renderings to produce post-processed layer renderings.

Alternatively, the layer representing the part of the product, which casts a shadow on the ground floor, and the ground plane layer can be interpreted as "linked". In this case, the post-processor can be designed in such a way that the customization request for the ground plane layer is applied (linked) to the layer of the respective part, which casts the shadow on the ground floor.

The method of processing shadow layers separately (linked) is more flexible, as the basic layer rendering representing the shadow effects can be modified with various image compositing techniques, which can also be included within the post-processor system. A post-processor can, for example, multiply the shadow layer with any color or image to replicate various effects. Such process may, for example, mimic effects caused by displaying the product over different colored ground floors or being placed in front of different background images or textures.

Alternatively, render channels together with respective layer-id channels, which include silhouettes of the shadow layer, can also be produced by augmenting the model with a ground plane. In this case, an advanced post-processor has to be set up in such a way that the customization request for the area representing the silhouettes of the ground plane layer is applied (linked) to the area representing the silhouettes of the layer of the part, which casts the shadow on the ground floor.

One aspect of the present invention relates to displaying the shadow effects of a product together with the shadow effects of an optional part and/or add-on. In this aspect of the present invention, separate basic layer renderings representing the shadow effects are generated, and said separate shadow renderings are composited.

The reproduction of shadow effects of product with optional parts needs special attention, because the optional parts may affect the shadows casted on the ground plane, whenever they will be displayed together with the product. To accommodate such combined shadow effects, two different basic layer renderings of the ground plane are required to be generated; one, which includes the shadow effects casted by the product, and another one, which includes the shadow effects casted by its optional part and/or add-on. If a product has more than one optional part and/or add-on, then more than one basic layer rendering of the ground plane would be required to be produced. The shadow effect displayed by the post-processed layer rendering of the optional part and/or add-on, and the shadow effect displayed by the post-processed layer rendering of the product without the optional part and/or add-on can be composited to form a single post-processed layer rendering with image compositing techniques (for instance by composing post-processed layer renderings with "multiply" compositing techniques) in order to produce the combined shadow effects of the product and its optional part and/or add-on. The single post-processed layer rendering can be composed with all other post-processed layer renderings to display the personalized product view displaying correct shadows of the product and its (optional) parts.

One aspect of the present invention relates to augmenting the customization space. In this aspect of the present invention, a plurality of basic layer renderings are produced for each layer, said plurality of basic layer renderings representing a plurality of dimensions of the customization space.

Picture manipulation techniques, which rely on 2D representations only, are limited. Such techniques can only be applied if coherent mappings can be defined on the basis of the information recoverable from the respective 2D representations. In case different surface and/or volume properties of a layer of a model are required to be offered, involving, for example modified surface properties, coherent transformations might be difficult to define. An easy solution would be to increase rendering efforts and provide several basic layer renderings for one and the same layer. Such a method would especially be suited to cover cases of providing more than one dimension of a customization space to be changed at the same time. It might be useful to provide several basic layer renderings for changes in one dimension (covering, for instance, several finishes of a certain metal part), but to rely on a post-processor for such changes in another dimension (covering, for instance, several colors of the same part). In a limiting case, in which it would not be effective nor even possible to define transformation algorithms for each of the target properties of a customization space for a certain product or one or more of its parts, one would be forced to pre-render every alternative basic layer rendering, each assigned a different value of the respective attribute, which is affected by a customization option, or which would be affected by a customization option.

One aspect of the present invention relates to modifying basic layer renderings or render channels by a post-processor using pre-generated 2D maps. This method can, for instance, be used for displaying inclusion effects of transparent or semi-transparent objects, but is not limited to such effects. It would be very difficult and time consuming to include the geometry of such inclusions in 3D objects. A basic layer rendering of a layer representing such a transparent or semi-transparent object without inclusions can be produced instead. A 2D map of such inclusions can be created with the help of a 2D photo editing system (e.g., Photoshop, Coreldraw). Such a pre-generated map can be used to manipulate basic layer renderings or a render channel (with the help of various image compositing techniques) to replicate the effect of flawed transparent or semi-transparent objects by using a post-processor. These inclusions may, therefore, be accurately displayed in final renderings without applying any special rendering efforts.

One aspect of the present invention relates to animations. A virtual fly-by or animation may be produced by sequentially displaying the personalized product out of series of pre-computed images of personalized product views, wherein said virtual fly-by may comprise single or multi customization options of the product from various spatial views. The virtual fly-by may comprise different customizations of the object, thus giving the customer the opportunity to experience different appearances of the object within a single animation.

One aspect of the present invention relates to displaying the personalized view, wherein the personalized view is composed by displaying uncombined or combined customized layers. Post-processed layer renderings may be displayed with the help of a layer composing system. Basic layer renderings as well as post-processed layer renderings are semi-transparent images, which can be composed together in order to display them as a single rendering. Such a single rendering may be displayed (or stored) on a display device (1) by merging the post-processed layer renderings into one single rendering (a single picture file), or (2) by exploiting technologies, which allow to display (or store) multiple semi-transparent images one over another, without combining them beforehand as a single image file. The single renderings displayed by a layer composer are true representations of a certain customized product, as it has been demanded by a user or customer by initiating the customization request.

One aspect of the present invention relates to distributed computing. The basic layer renderings or the render channel (together with a layer-id channel) may be pre-generated and stored on the device of a vendor and provided to an external interface. Said interface may be accessible by a device of the client. The basic layer renderings of the product are manipulated on the device of the client, however. Thus, the numerically expensive part is computed on the device of the vendor and the post-processing along with the composing part is left to the device of a client, for example a smart phone or a personal computer. In other words, according to this aspect of the invention the basic layer renderings or the render channel (together with a layer-id channel) are first pre-generated on a device of a vendor, then provided to an external interface which is accessible by a device of the client, and the basic layer renderings or the render channel (together with a layer-id channel) of the product are manipulated directly on a device of the client to display the personalized product view.

It is possible to send the basic layer renderings directly to the device of the client, which can also function as a post-processor and layer composer. In this case, manipulations of basic layer renderings are done directly on the device of the client. Technologies that would allow such a process are for instance Flash or HTML5. Once the basic layer renderings are loaded to the device of the client, the customization request is directly processed on the device of the client by using the client's device as a post-processor and layer composer. The personalized view may then be displayed by composing the post-processed layer renderings without merging them beforehand.

Such composition saves processing time with respect to changing customization requests and will enhance user experience. Another advantage of displaying uncombined post-processed layer renderings is that the post-processing has only to be applied to the particular basic layer rendering, for which a new customization request is received. This will save the time of re-processing all individual layers for each new customization request. Utilizing the client's device as a post-processor and layer composer allows to display various personalized product views instantly, without re-loading new renderings for each new customization request.

One aspect of the present invention relates to an alternative distributed computing. The basic layer renderings or the render channel (together with a layer-id channel) may be pre-generated and stored on the device of a vendor, and an external interface is provided. Said interface may be accessible by a device of the client. When the client requests a personalized product view, the client's device could transmit the customization request through a vendor's interface defining the particular combination of target attributes. The device of the vendor then produces a personalized product view by performing post-processing and composing methods. The resultant personalized product view can be sent to the client's device through an interface. In other words, according to this aspect of the invention the basic layer renderings or the render channel (together with a layer-id channel) are pre-generated on the device of a vendor and an external interface is provided which is accessible by a device of the client, the client sends the customization request through the interface, the basic layer renderings or the render channel (together with a layer-id channel) of the product are manipulated on the device of the vendor and the resulting personalized product view is sent back to the device of the client through an interface.

One aspect of the present invention relates to utilizing a sequence of uncombined basic layer renderings for producing animations. Pre-producing an animation without a post-processor will involve a lot of processing time and efforts, because it would be necessary to generate an entire sequence of personalized product views for processing a certain customization request. Instead of pre-producing each of a multitude of renderings needed for an animation, just one single sequence of basic layer renderings has to be generated. The post-processor could work on the device of the user and will process the respective algorithms in order to display animated streams of representations, displaying the correct target properties according to a certain customization demand. Post-processing preloaded animations consisting of sequences of uncombined basic layer renderings will result in a time and cost effective method for generating a personalized product animation. In other words, according to this aspect of the invention, sequences of basic layer renderings are pre-generated and stored on the device of a vendor, and are provided to an external interface; said interface being accessible by a client, and wherein the sequence of basic layer renderings is post-processed and composed directly on the device of the client.

Each layer of the model may consist of a sequence of basic layer renderings, which can be generated and stored as a single basic layered animation (which may carry certain video compression codecs with transparency support), which can be provided to the device of the client through an interface. The plurality of basic layered animations can be post-processed directly on the device of the client (according to a customization request), and can be utilized by a layer composer to display a personalized product animation on the device of the client. If a new customization is requested, the post-processing is directly applied on the client's device, without interrupting an existing running personalized product animation, and without reloading any new data from the vendor's device. The post-processor utilizes simple algorithms, which do not require computationally intensive processes. This has the advantage of enhanced user experience while watching personalized streams of animated products.

One aspect of the present invention relates to performing pricing calculations. It may be desired to display the price of a specific personalized variant of the product together with the personalized product view or animation. One possible way to calculate the price of a particular customized product (i.e., a personalized product reflecting a particular combination of attributes) is by storing the price for each alternative target attribute value of each layer in a price calculation engine, which may use the price associated with each attribute value for each layer (possibly in combination with information such as the current cost of particular types of gemstones, markup amounts, and discounts) to calculate the price of the entire customized product.

Pricing for a particular part of a product may be predetermined in any way, such as by calculating the price based on features (e.g., size, material) of the part, or simply by looking up the price of the part (such as by using the component's SKU as an index for a database). However the price is calculated, the resulting price may be displayed to the client as part of or in addition to the personalized product view. As a result, the client may select a particular set of attributes for each layer, and in response immediately see a photo-realistic personalized product view along with its associated price.

Brief Description of the Drawings

The method according to the invention is described in more detail herein below by way of exemplary embodiments and with reference to the attached drawings, in which:

Fig. 1 shows a product (ring) decomposed into parts;
Fig. 2 shows a product model decomposed into layers and objects;
Fig. 3 shows an assignment of attribute types and values to different layers of a model;
Fig. 4 shows a flow diagram for generating basic layer renderings;
Fig. 5 shows a system for generating basic layer renderings;
Fig. 6 shows basic layer renderings;
Fig. 7 shows a flow diagram for generating post-processed layer renderings;
Fig. 8 shows a system for generating post-processed layer renderings;
Fig. 9 shows post-processed (customized) layer renderings;
Fig. 10 shows a flow diagram for displaying a personalized product view;
Fig. 11 shows a system for displaying a personalized product view;
Fig. 12 shows a personalized product view;
Fig. 13 shows a product model with an additional ground plane layer for creating shadow effects;
Fig. 14 shows a basic layer rendering of a ground plane;
Fig. 15 shows basic layer renderings including a ground plane;
Fig. 16 shows a personalized product view with shadow effect;
Fig. 17 shows basic layer renderings of a product (pendant) with an optional part (chain) along with shadow effects and a single post-processed layer rendering representing combined shadow effects;
Fig. 18 shows a personalized product view with and without an additional part;
Fig. 19 shows a personalized product view with and without an additional part including shadow effects;
Fig. 20 shows different perspectives (camera views) of a 3d model for generating a virtual fly-by animation;

Fig. 21 shows a flow diagram for generating a render channel and a layer-id channel;

Fig. 22 shows a system for generating a render channel and a layer-id channel;

Fig. 23 shows a render channel and a layer-id channel;

Fig. 24 shows a flow diagram for a decomposition method using layer-id channels;

Fig. 25 shows a system for decomposing a render channel with the help of a layer-id channel;

Fig. 26 shows an alternative layer-id channel;

Fig. 27 shows a flow diagram for advanced post-processing by directly manipulating the render channel;

Fig. 28 shows a system using an advanced post processor; and

Fig. 29 shows a plurality of basic layer renderings for a particular layer using advanced labeling.

Embodiments of the invention

Embodiments of the present invention are directed to a method for efficiently generating practically infinite componentized 2D (two dimensional) rasterized views of a product, such as a ring or other piece of jewelry, from a 3D (three dimensional) model of a product. A 3D CAD (Computer Aided Design) model is used to represent a complete 3D geometry of the product. The product is decomposed into components or parts that can be personalized on demand.

With respect to one embodiment, the method comprises: (a) decomposing a three dimensional CAD model into a plurality of layers, each representing a part of a customizable product; (b) associating with each layer, a plurality of attribute types, each of which is assigned an admissible value; (c) rendering each of the plurality of layers with respect to a specific attribute assignment; (d) modifying the resulting plurality of renderings by a post-processing system according to a specific customization request; and (e) composing the modified plurality of renderings to display a personalized variant of the whole product.

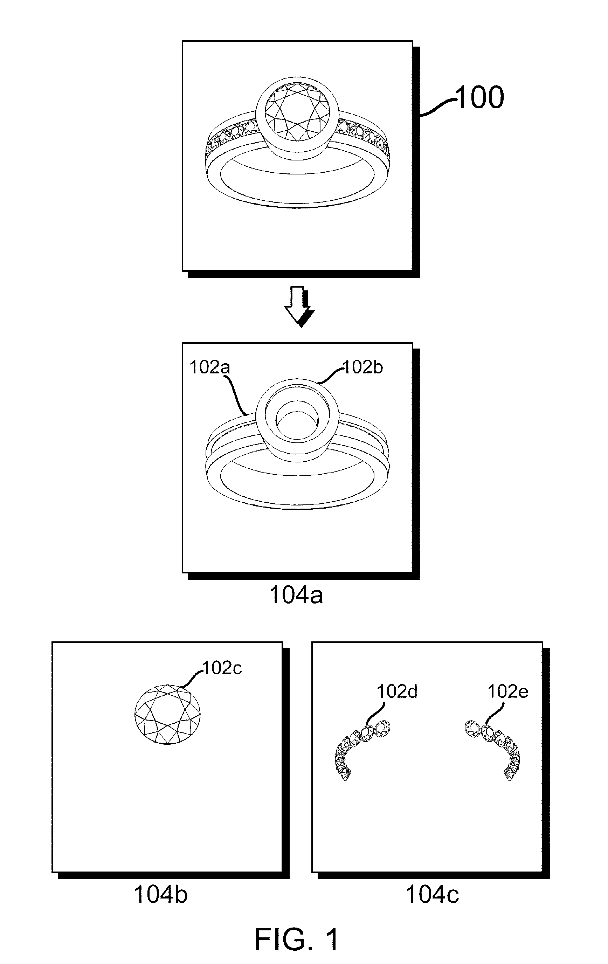

Fig. 1 depicts a ring like product. The product 100, as displayed in FIG. 1, has five parts 102a-e: a shank 102a, a head 102b, a center stone 102c, a set of left-side stones 102d, and a set of right-side stones 102e. The ring has two main metal parts, a shank and a head, which may include various gemstone parts, such as a center stone, fitting into the head, and a group of side stones, fitting into the shank. Parts of the product may or may not be individually customizable. For example, product 100 has a shank 102a, which can be customized with various metal types (e.g., white gold, rose gold, silver) and a center stone 102c, which can be customized with various gemstone types (e.g., diamond, citrine, amethyst).

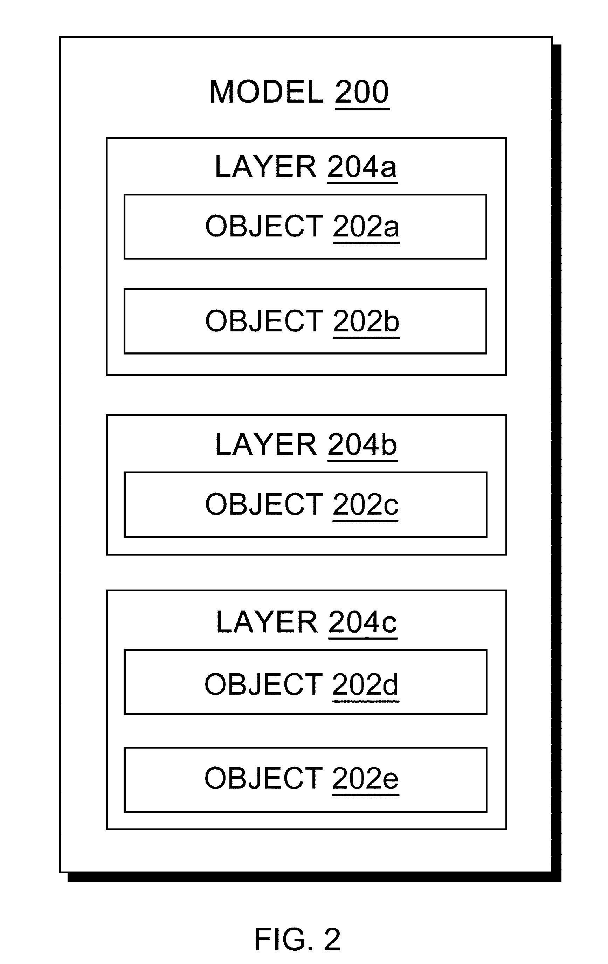

Fig. 2 shows the corresponding hierarchical structure of a 3D model, representing the product 100 of FIG. 1. FIG. 2 contains 3D objects 202a-e corresponding to the parts 101a-e of the product 100 of FIG. 1.

The objects 202a-e of model 200 are grouped into various layers that represent domain relevant characteristics of the product. Layer 204a of the model 200 shown in FIG. 2 contains the objects 202a-b, layer 204b contains the object 202c, and layer 204c contains the objects 202d-e. It is particularly useful to group similar objects together within a single layer. Layer 204c contains, for example, multiple side stones. In order to facilitate the customization of all of the side stones simultaneously, it would be necessary to group them all together in one single layer. If an individual customization of each of the side stones is desired instead, it is necessary to assign each of them a different layer.

A CAD system is used to facilitate the process of creating and managing layers. Different objects of a CAD model are organized into custom-named groups (e.g., "metal group 01", "gem group 01", "gem group 02"). Such custom-named groups are created and used to represent the layers of a product model. They are used as "labels" for the respective layers. For instance, the layer 204a would be assigned the label "metal group 01", whereas the layer 204b would be assigned the label "gem group 01", and the layer 204c would be assigned the label "gem group 02".

The metal parts of the ring 100 (FIG. 1) can be made up of different materials (e.g., silver, gold, platinum), which may carry some physical properties (such as color, volume, density, finish), which may have certain property values (e.g., white, 500 mm3, 11.5 gram/cm3 and polished respectively). The gemstone parts of product 100, can also be made up of different materials (e.g., diamond, citrine, ruby), which may carry certain physical properties (e.g., color, refraction index, volume, transparency, finish), and corresponding property values (e.g., white, 2.417, 125 mm3, 1, and polished respectively).

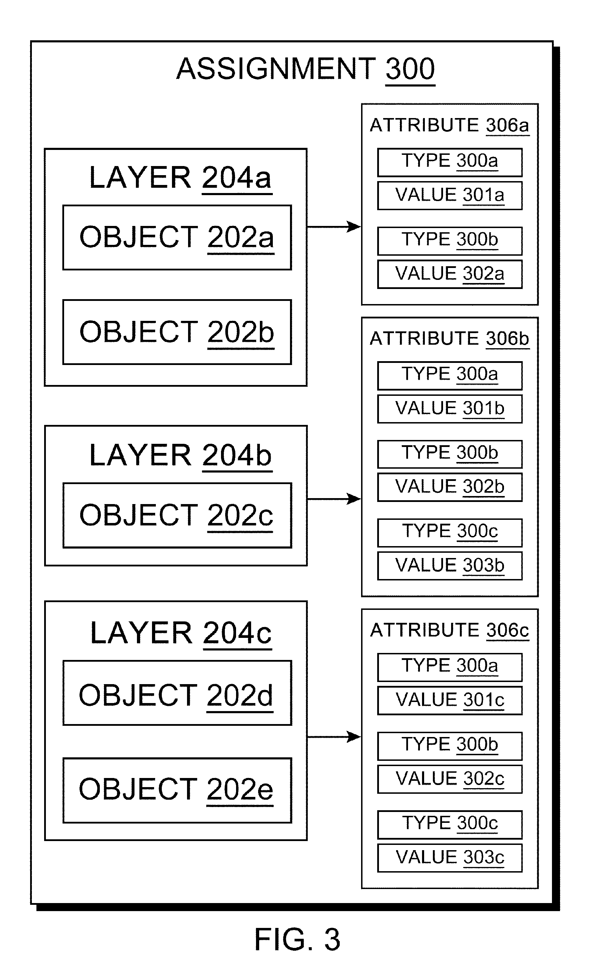

Each layer of a 3D model is associated with a certain attribute, representing certain kinds of surface and/or volumetric physical properties of the respective part(s), a layer of the model represents. Each attribute is associated with certain attribute types and corresponding attribute values. Layer 204b of model 200 (FIG. 2) represents a gemstone part 102c of a piece of jewelry, which may have an attribute 306b (FIG. 3). A certain set of attribute types is associated with such an attribute, for example, "color", "reflectivity" and "refractivity", each of which has a permissible set of attribute values. The layer 204a of model 200 (FIG. 2) represents the metal parts 102a-b, which may have a different attribute 306a (FIG. 3). A certain set of attribute types is associated with such an attribute, for example, "color" and "reflectivity", each of which may have a permissible set of attribute values. The particular attribute type "refraction" is not be applied to the layer 204a, as metal is not a transparent material. Each attribute may be associated with any number of attribute types and corresponding permissible sets of attribute values, representing the physical properties of the respective materials.

It may not be desired to offer an individual customization of two different parts of a product. Referring to product 100 (FIG. 1), the two metal parts 102a and 102b, namely the shank (102a) and head (102b), may not be desired to be customizable individually. In such a case, the corresponding objects 202a and 202b of product model 200 (FIG. 2) may be grouped into one single layer 204a. Any attribute assigned to layer 204a will then be applied to both the objects (202a and 202b). FIG. 3 illustrates a simplified attribute assignment 300, in which each of the layers 204a-c has been assigned exactly one attribute. Layer 204a is assigned attribute 306a (for example, the material "yellow gold"); layer 204b is assigned attribute 306b (for example, the material "ruby"), and layer 204c is assigned the attribute 306c (for example, the material "black diamond"). Each attribute has its associated attribute types with corresponding permissible attribute values. Attribute 306a has two associated attribute types, namely type 300a (for example, "color"), and type 300b (for example, "reflectivity"), and their corresponding attribute values 301a (for example, "yellow"), and 302a (for example, "1"). Attribute 306b has assigned the attribute types 300a-c (for example, "color", "reflectivity", and "refraction" respectively), and their corresponding attribute values 301b (for example, "red"), 302b (for example, "1"), and 303b (for example, "1"). The attribute 306c has the same associated attribute types 300a-c as attribute 306b, which have been assigned different attribute values 301c (for example, "black"), 302c (for example, "0.9"), and 303c (for example, "0"). The attribute assignment 300 is just an example of an assignment with respect to the particular product model 200 of FIG. 2.

A certain arbitrarily chosen color value will be assigned to each layer, and only a single rendering will be generated based on this value. It is not essential that the chosen value corresponds to a visible property of any of the customization alternatives. Referring to FIG 3, the attribute type 300a representing the attribute "color" might be assigned arbitrary values 301a-c with respect to each attribute 306a-c. A post-processing system will then be used to map these (arbitrarily chosen) source values (represented in the 2D renderings) onto any of the permissible target values, defined by the requested color alternative of a certain product or one or more of its parts, without utilizing a 3D CAD system or a rendering engine.

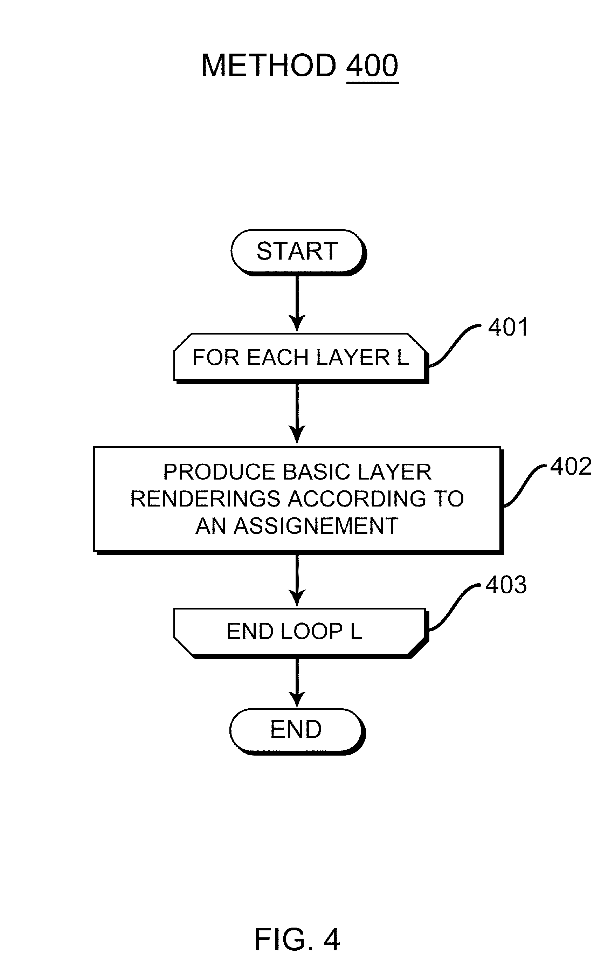

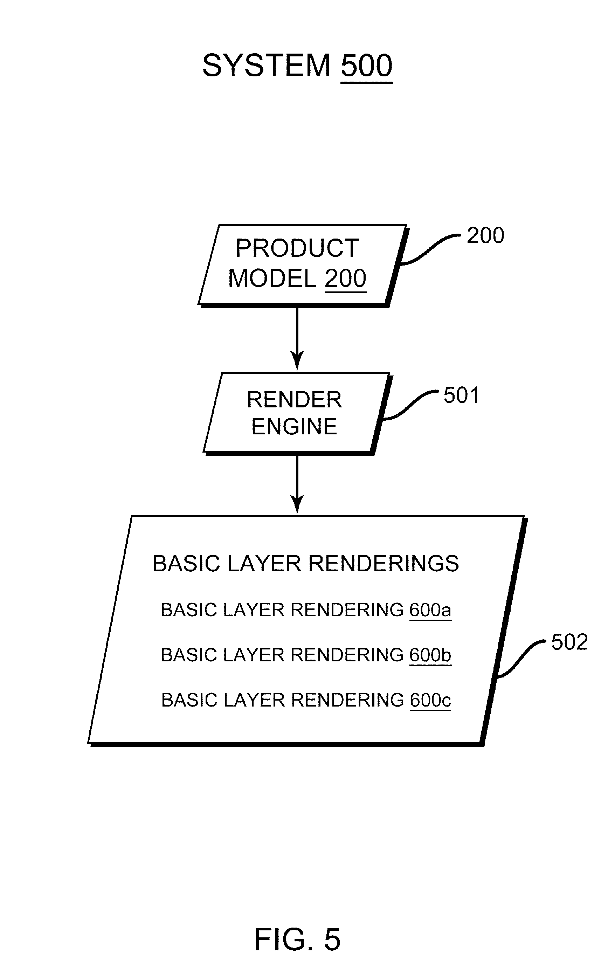

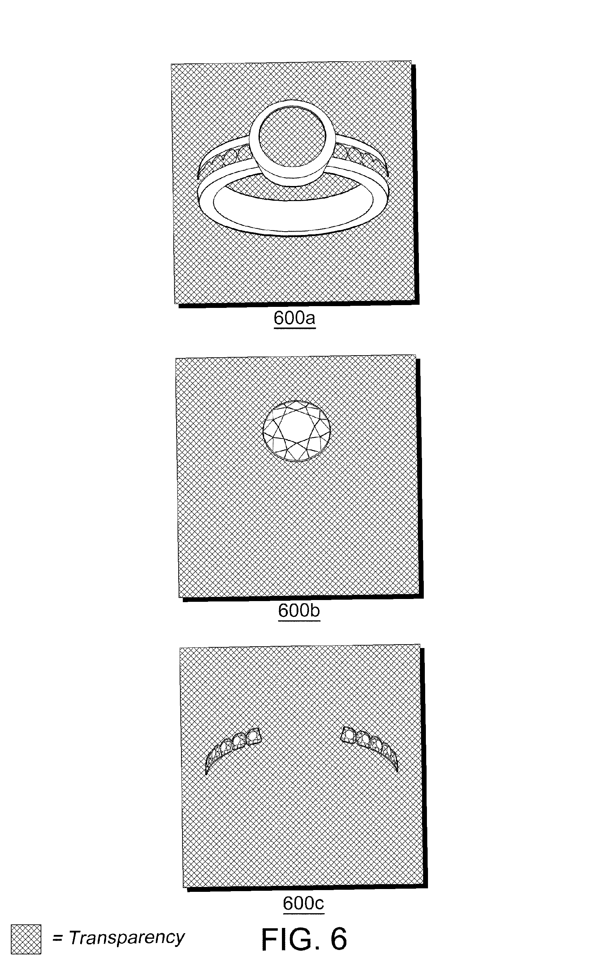

After assigning attributes to each layer, a rendering engine may produce individual renderings for each layer. Such renderings are called "basic layer renderings" herein. FIG. 4 displays a method 400, which is performed by system 500 of FIG. 5. Referring to system 500 of FIG. 5, a rendering engine 501 enters a loop over each layer L with respect to the product model 200 (step 401 of FIG. 4). Within this loop, the rendering engine 501 generates the basic layer renderings 600a-c (displayed in FIG. 6) by assigning each layer exactly one attribute as displayed in step 402 of FIG. 4. The basic layer renderings 600a-c are 2D representations of the corresponding layers 204a-c of the product model 200 (FIG. 2), and true representations of all non-customizable properties of the corresponding parts of a product. The attribute type "color", however, will not get truly represented by these basic layer renderings though, because an arbitrary attribute value has been assigned to the respective layers. An example of such an arbitrary attribute value could be a grey color represented by the color value "127,127,127" following an RGB color scheme.

To make it easier to refer to a certain basic layer rendering, the labeling used for the respective layers (i.e. "metal group 01", "gem group 01", "gem group 02") may be used to refer to the corresponding layer renderings. The basic layer renderings 600a-c (FIG. 6), for example, would be assigned the labels "metal group 01", "gem group 01", and "gem group 02" respectively. Such labels can be, for instance, assigned by using them as (part of) a filename, the respective renderings are saved with.

A customization demand refers to an intention of a user or a customer, who desires to see one or more pictures of a certain customization alternative of a product. Specifically, a customer may desire to see product 100 with a specific configuration of the metal parts 102a-b made up of rose gold, the stone part 102c made up of ruby and the stone parts 102d-e made up of aquamarines. A customization request represents such a customization demand and translates it into a readable input for a post-processing system. It can be coded as a string, structured into sequences, which (at least) contains a reference to the respective basic layer rendering (via its label), and a target property for each customizable basic layer rendering. Considering basic layer renderings 600a-c of Fig. 6, a possible customization request can be written as the following sequence of pairs, wherein the first element refers to the basic layer rendering (using its label), and the second element refers to the corresponding target attribute:

<metal group 01, rose gold>, <gem group 01, ruby>, <gem group 02, aquamarine>

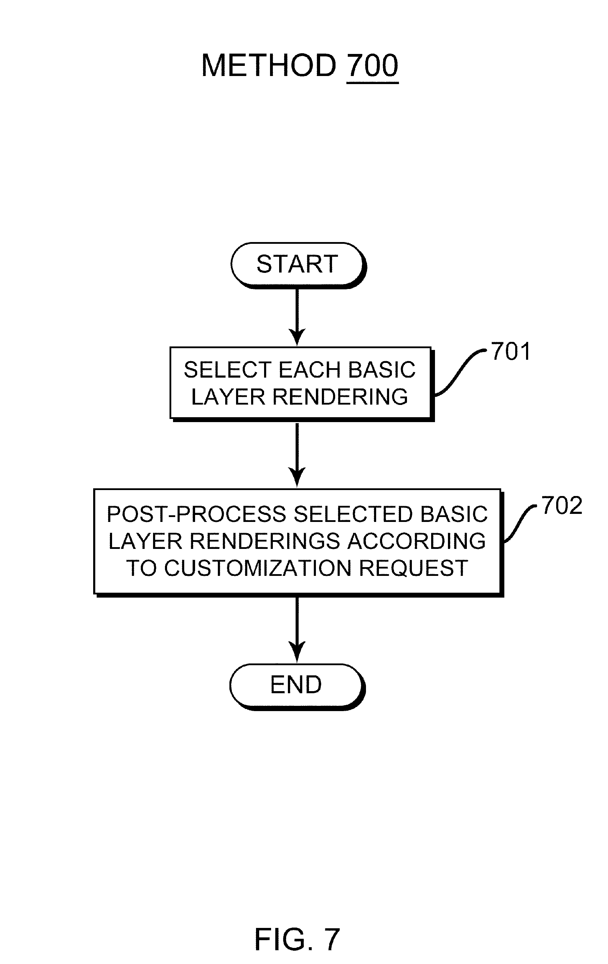

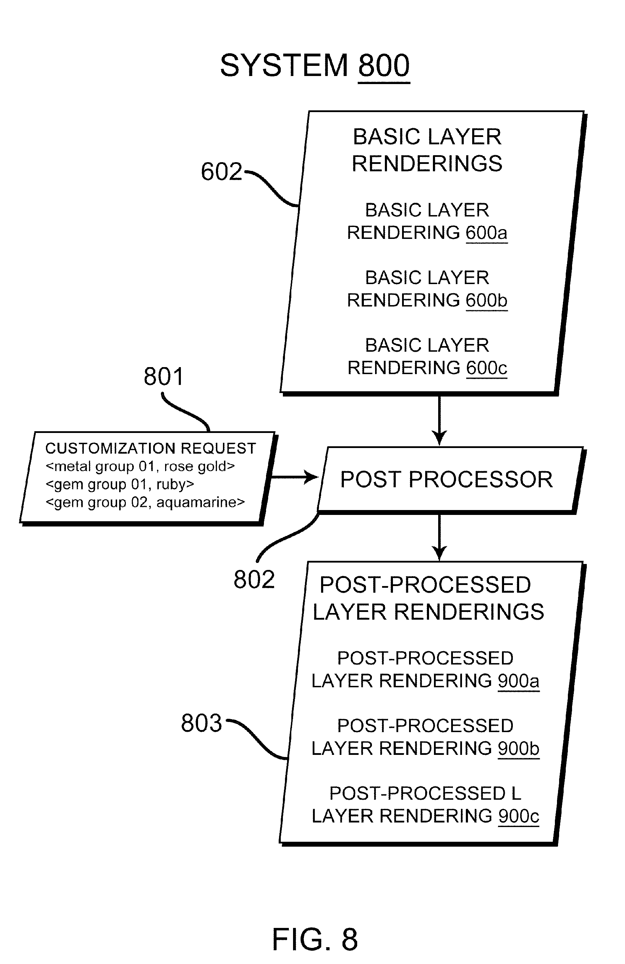

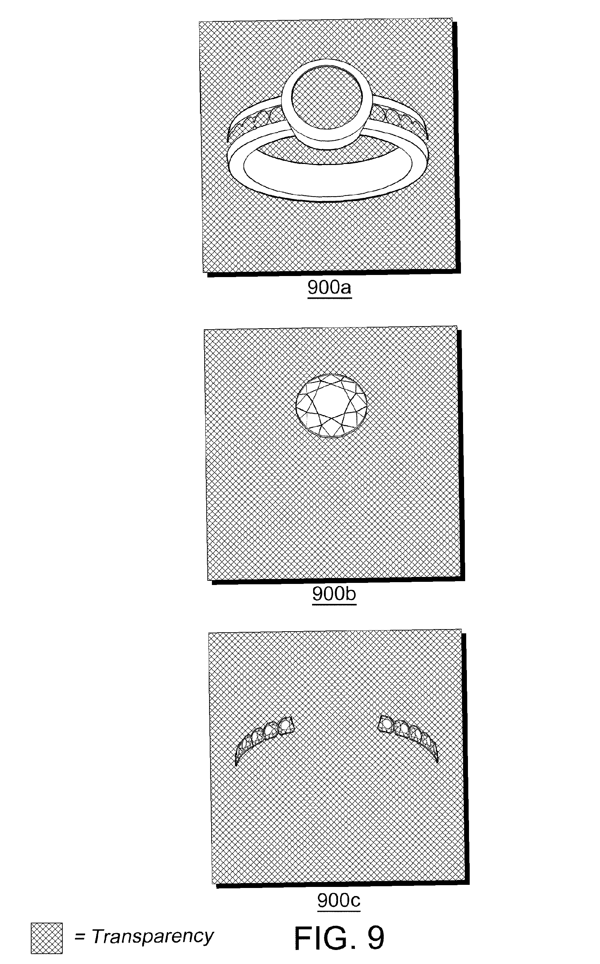

Method 700 (FIG. 7) is performed by the post-processor 802 of system 800 (FIG. 8). The basic layer renderings 600a-c produced by system 500 are processed by the post-processor 802 following a certain customization request (as displayed in FIG. 8). FIG. 9 represents the post-processed layer renderings 900a-c generated by system 800.

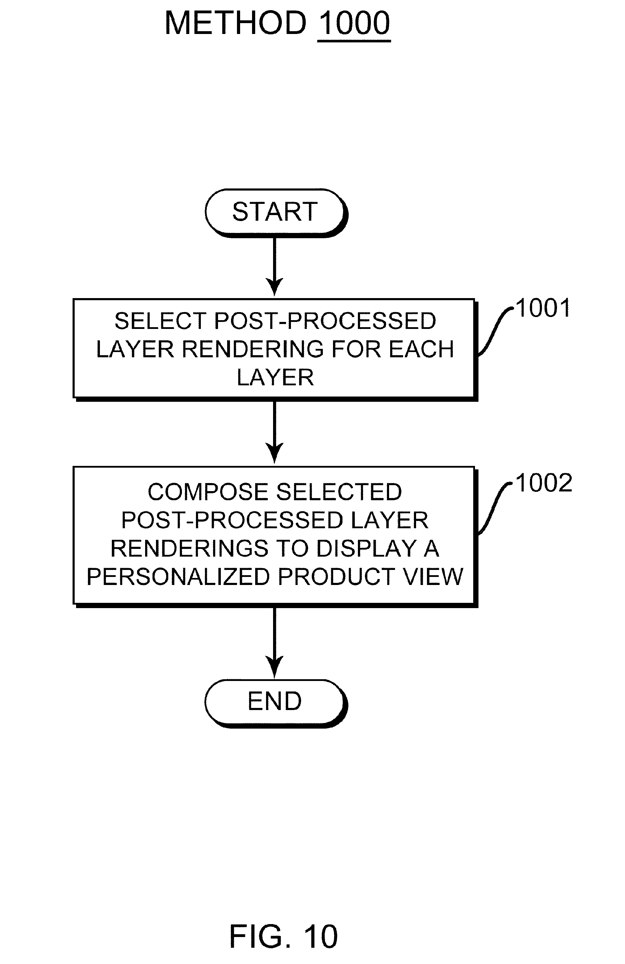

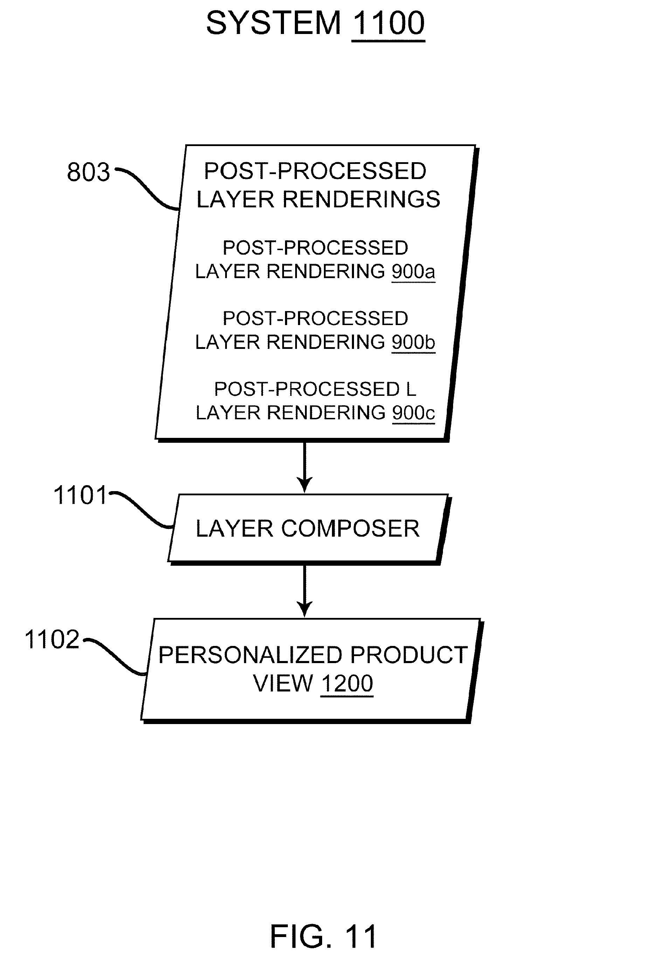

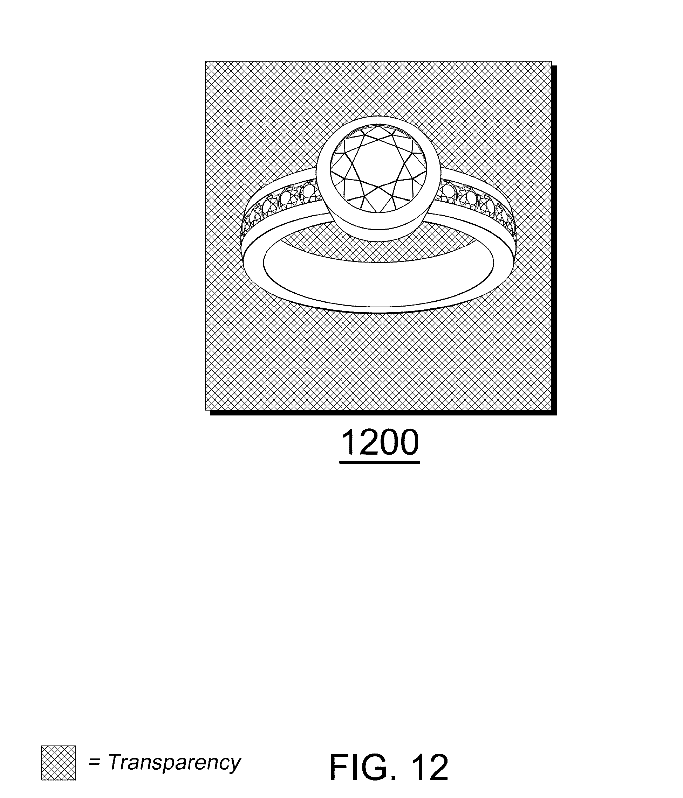

Once the post-processed layer renderings are generated, they can be composed and displayed with or without combining them into a single file. Method 1000 (FIG. 10) is performed by the layer composer 1101 of system 1100 (displayed in FIG. 11). The layer composer 1101 utilizes the post-processed layer renderings 900a-c and generates a personalized product view. The resulting personalized product view 1200 composed in step 1102 of system 1100 (FIG. 11) is displayed in FIG. 12.

In one embodiment shadow effects are generated. Shadows are complex effects of lighting, geometry and certain physical properties of the parts (of the product). Shadow effects are important to be displayed in personalized product views, as shadows are physical phenomena, which add more realism. It is, therefore, desirable to include shadows in the final personalized product views to increase the quality of the visualizations.

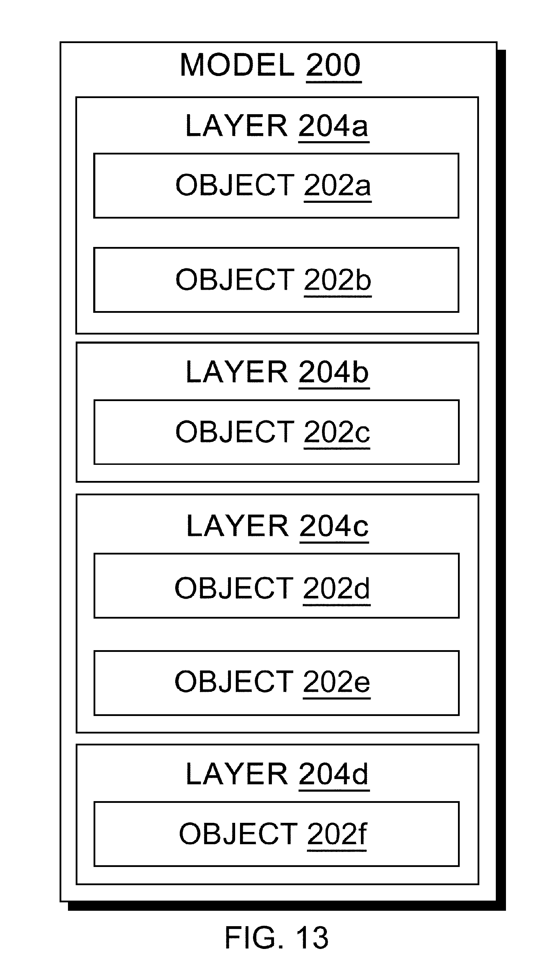

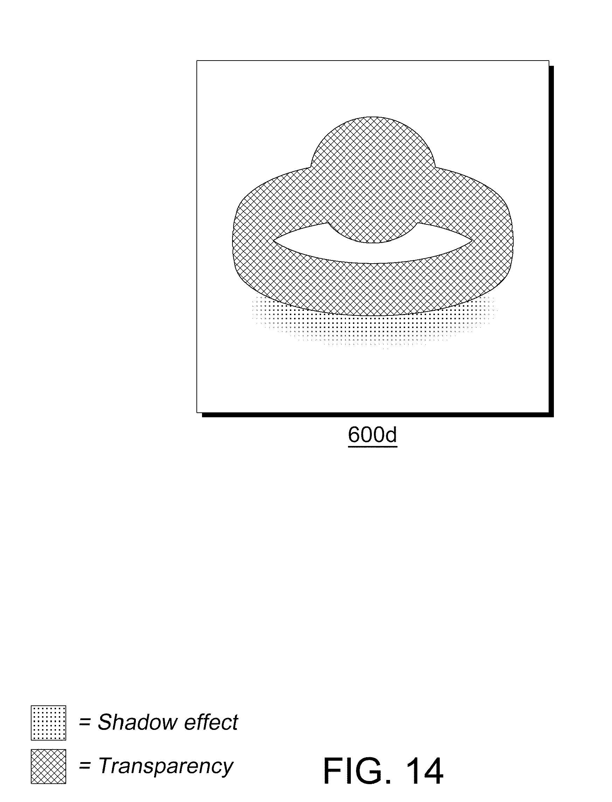

To accurately reproduce the shadow effect of product 100, an additional object 202f has to be added to the product model 200. The object 202f (representing a "ground plane") may, therefore, be included in the product model as an additional layer 204d (as displayed in FIG. 13). Appropriate attributes representing respective surface and/or volume properties of a ground plane are assigned to the new layer 204d; and a basic layer rendering 600d is created by the system 500 followed by method 400 (as displayed in FIG. 14).

The ground plane layer 204d, although present in the product model 200, is usually not something considered to be customizable by a customer. The ground plane layer will, however, be affected by customization requests with respect to other layers, representing parts of the product, which cast shadows on the ground plane. For example, if the metal layer 204a, for instance, is desired to be displayed as made of yellow gold, a yellowish effect on the ground plane has to be displayed too, representing the shadow effect of layer 204a. Usually, only some but not all objects included in a product model are responsible for shadow effects on the ground plane. With respect to a particular representation of product model 200, objects 202a-b and thereby layer 204a, for instance, touches the ground plane, which is subjected to be responsible for a shadow effect. In this case, the customization of layer 204a will affect the representation of the ground plane layer 204d.

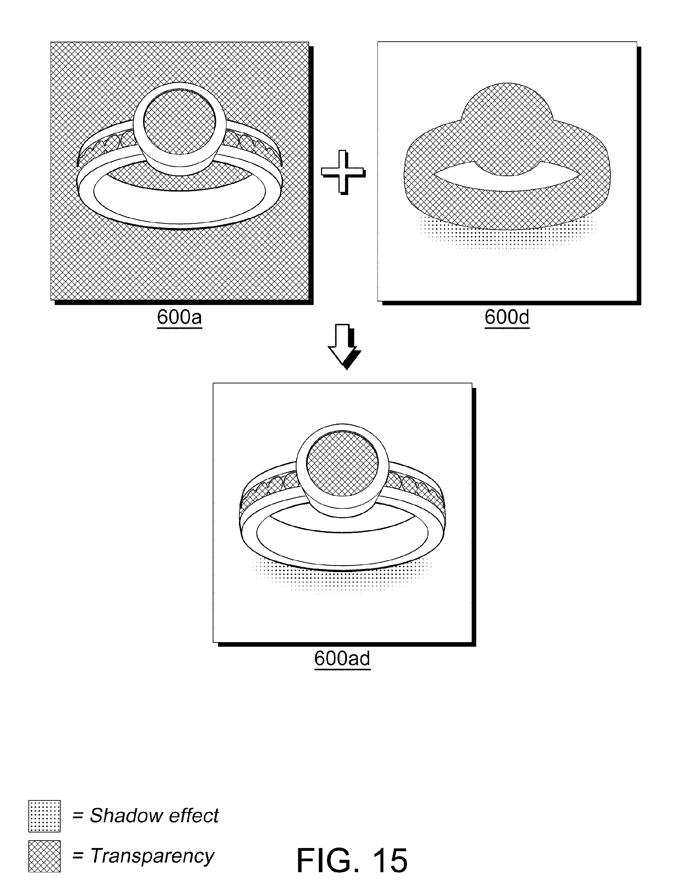

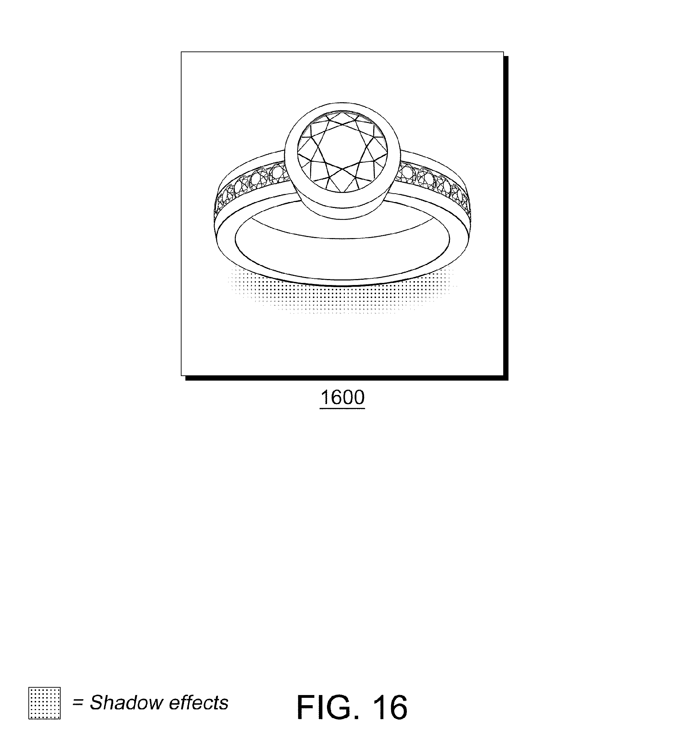

Such interdependent effects can be accurately displayed in a variety of ways. For example, the basic layer renderings 600a and 600d can be merged into one single basic layer rendering 600ad as displayed in FIG. 15. In this case, the post-processor 802 of system 800 utilizes the basic layer renderings 600ad, and 600b-c to produce post processed layer renderings (not displayed in the drawings). The resulting renderings can be combined by a rendering composer 1101 of system 1100 to display the personalized product view 1600 with correct shadow effects as displayed in FIG. 16.

Alternatively, the basic layer renderings 600a and 600d can be interpreted as "linked". In this case, the post-processor 802 of system 800 can function in such a way that the customization request for layer 204a is applied (linked) to layer 204d. The resulting post-processed layer renderings (not displayed in the drawings) can be composed with the help of the layer composer 1101 of system 1100 to display the personalized product view together with the shadow effects. The resulting personalized product view will be the same as displayed in FIG. 16.

The method of processing the layer 204d separately is more flexible, as the basic layer rendering 600d can be modified with various image compositing techniques. A post-processor can, for example, multiply the shadow layer with any color or image to replicate various effects. Such process may, for example, mimic effects caused by displaying the product over different colored ground floors or being placed in front of different background image or texture.

In one embodiment, the product model comprises additional parts. 3D objects for such optional parts can be created and grouped into optional layers within a product model. Basic layer renderings for such optional layers are produced by the rendering engine with method 400.

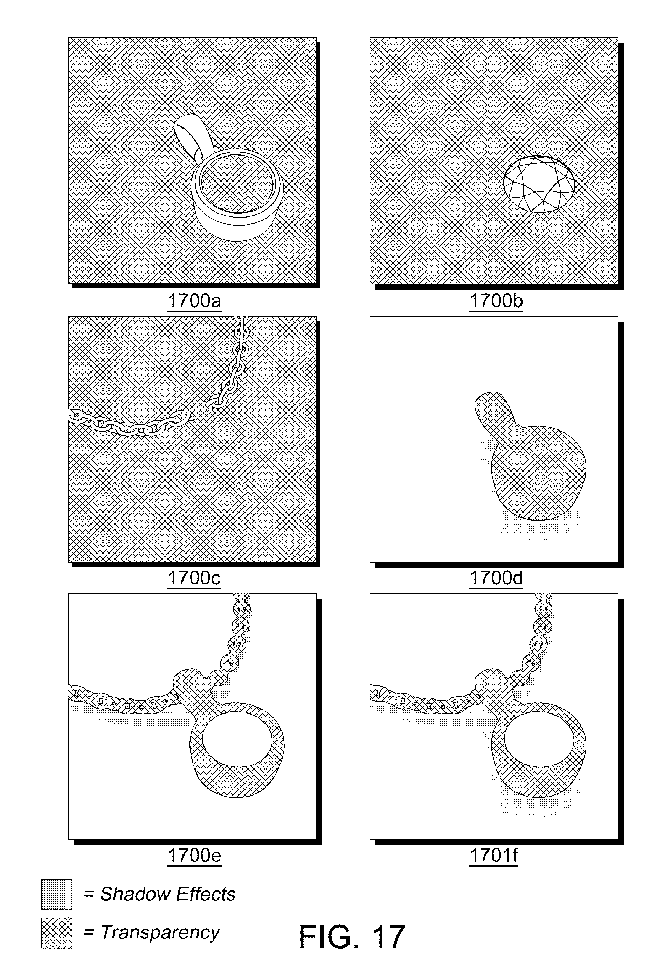

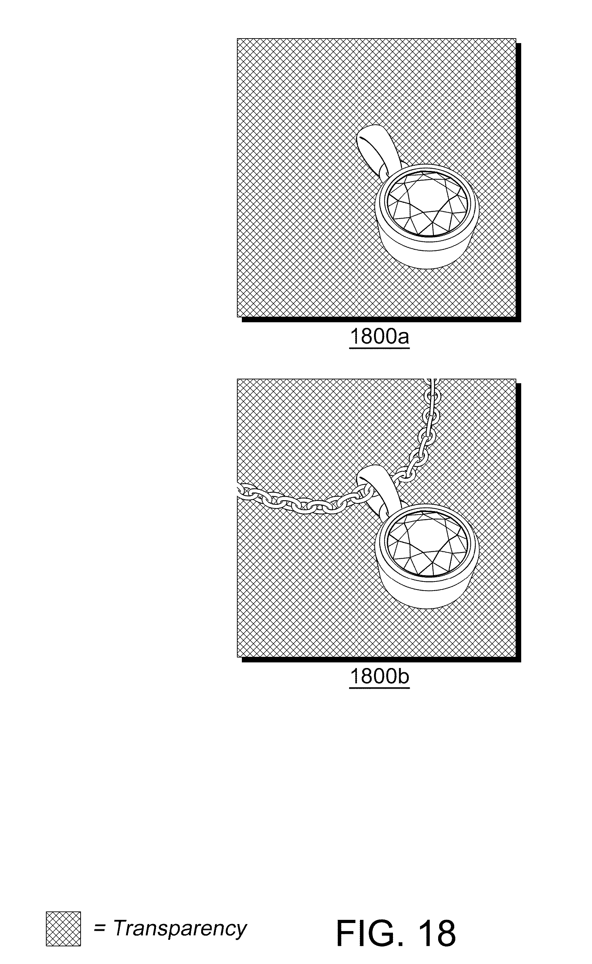

FIG. 17 displays the basic layer renderings 1700a-c of a product model representing a product, such as a pendant, with an optional part such as a chain (1700c). If a customer demands the pendant to be displayed without the chain, the post-processor utilizes the basic layer renderings 1700a-b to produce post-processed layer renderings 1701a-b (not displayed in the drawings), which can be composed by a layer composer in order to generate a personalized product view 1800a (as displayed in FIG. 18), which does not include a representation of a chain. If the customer demands the pendant displayed together with the chain, the post-processor utilizes the basic layer renderings 1700a-c to produce post-processed layer renderings 1701a-c (not displayed in the drawings), which can be composed by a layer composer to generate a personalized product view 1800b (as displayed in FIG. 18).

The layer composer 1101 of system 1100 may require following a specific image composing order, in case the representation of the optional part interferes with the representation of the product itself. The representation of the optional part, for instance, may cover a certain area of the represented product. In such a case, the post-processed layer renderings of objects, which represent optional parts, have always to stay above the post-processed layer renderings of non-optional parts in composition.

The reproduction of shadow effects of products with optional parts needs special attention, because the optional parts may affect the shadows casted on the ground plane, whenever they will be displayed together with the product. To accommodate such complex shadow effects, two different basic layer renderings of the ground plane are required to be generated; one, which includes the shadow casted by the product (for example a basic layer rendering 1700d representing the shadow of a pendant as displayed in FIG. 17), and another one, which includes the shadows casted by its optional part (for example a basic layer rendering 1700e representing the shadow of a chain as displayed in FIG. 17). If a product has more than one optional part, then more than one basic layer renderings of the ground plane would be required to be produced.

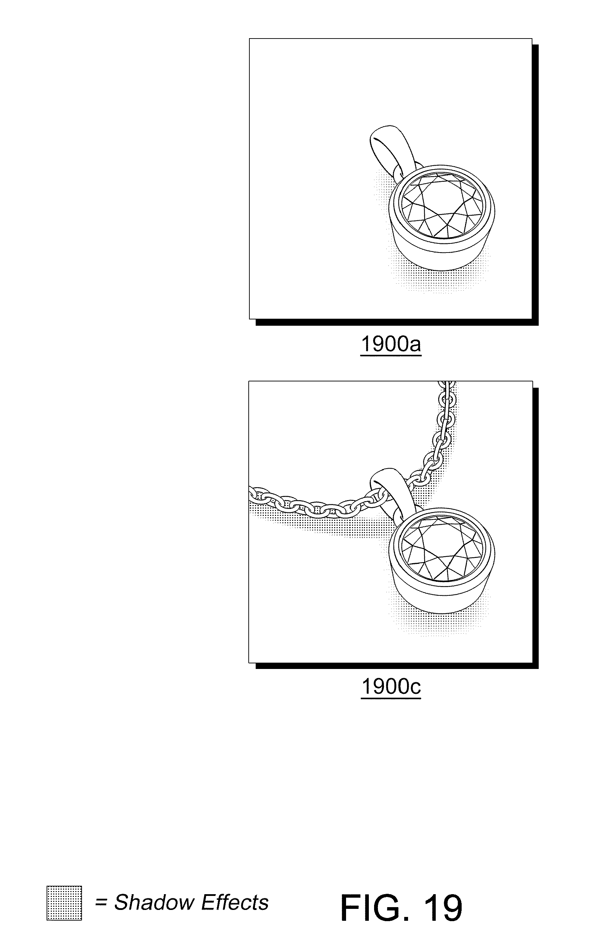

The shadow effect displayed by the post-processed layer rendering of the optional part (1701e, not displayed in the drawings), and the shadow effect displayed by the post-processed layer rendering of the product without the optional part (1701d, not displayed in the drawings) can be composed to form a single rendering (1701f as displayed in FIG. 17) with image compositing techniques (for instance by composing such post-processed layer renderings with "multiply" compositing technique) in order to produce the complex shadow effects of the product and its optional part. The single rendering 1701f can be composed with all other post-processed layer renderings (1701a-c, not displayed in the drawings). This will generate a personalized product view displaying correct shadows of the product and its (optional) part. FIG. 19 displays the personalized product views 1900a (without the optional part) and 1900b (with the optional part), both with corresponding shadow effects.

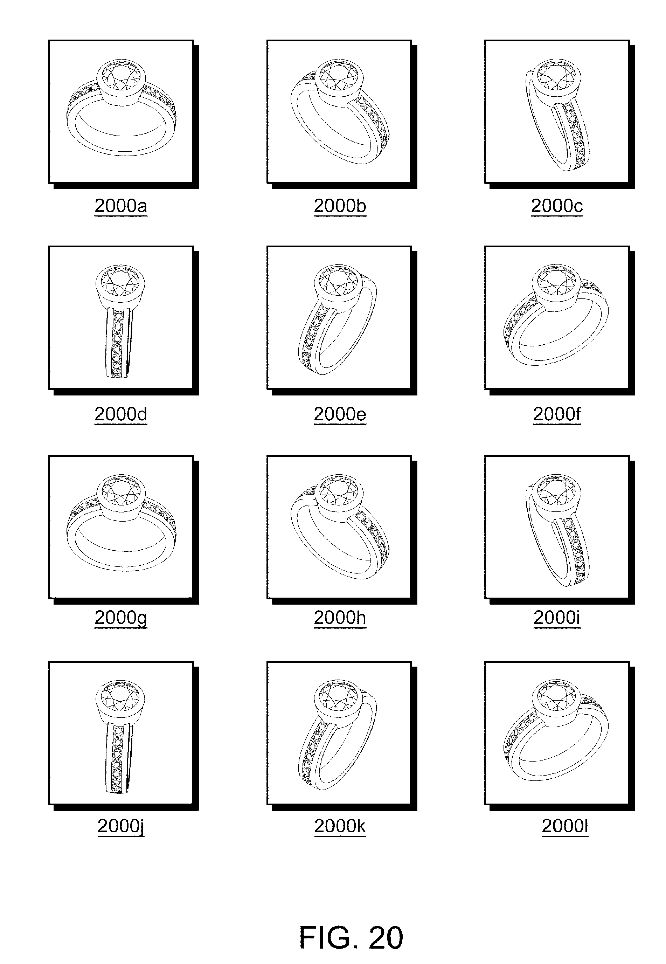

In one embodiment, animations of the personalized product are provided. The customized object rendering 1200 displayed in FIG. 12 represents only one specific 2D view of the product 100. However, a set of 2D views of the entire product from various perspectives may be generated to allow a 3D Virtual Reality (VR) "fly-by" of the product. The sequence of 2D views that comprise the fly-by may, for example, include "camera" views of the object from different spatial locations. An example of such views 2000a-1 is shown in FIG. 20. If these views were to be displayed on-screen in a sequence with a suitable frame rate, the result would be the appearance of flying around the ring to view it from different perspectives. A 3D fly-by view (animation) of a customized product requires generating a sequence of images of personalized product views from different spatial views. Such personalized product views can be produced with the same methods disclosed above.

The different camera views 2000a-1 may include different customized alternatives of the product being rendered, such that the assigned attributes of one or more layers vary from camera view to camera view. When such camera views are displayed together as an animation, different customization alternatives (e.g., different stone types/colors, or different metal types/colors) of the rendered product will be displayed as the fly-by progresses. Changing the attribute assignments in this way has the advantage that it allows the user to see not only the same customized product from different angles, but different customization alternatives of the same without incurring the resource overhead (memory, processor time, and disk storage) required to render a complete fly-by for each distinct customization alternative.

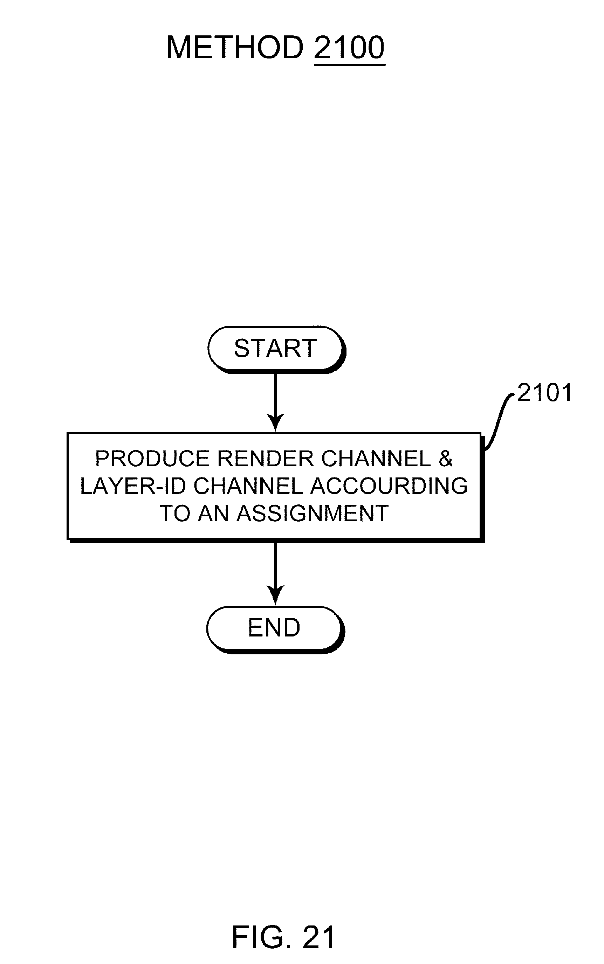

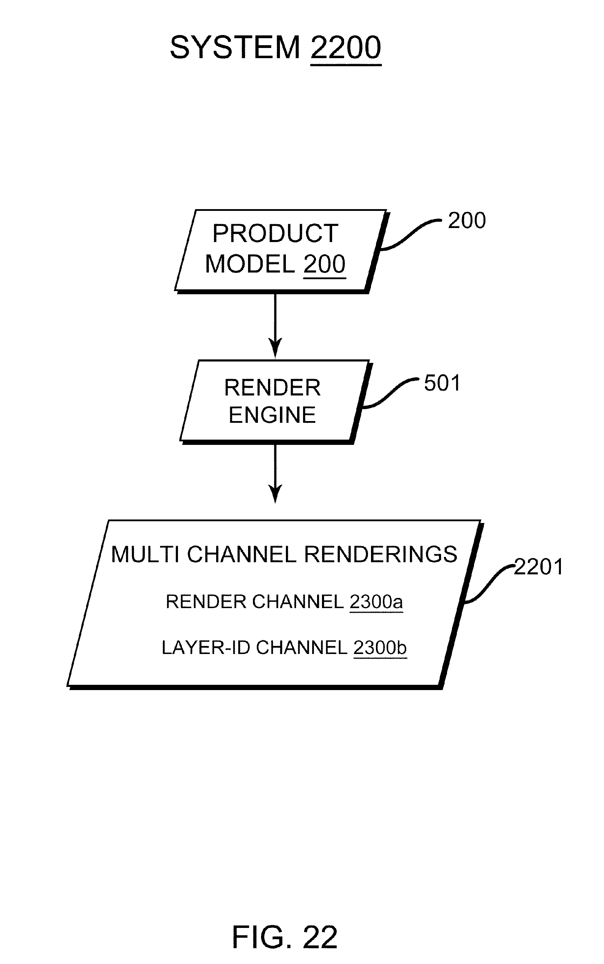

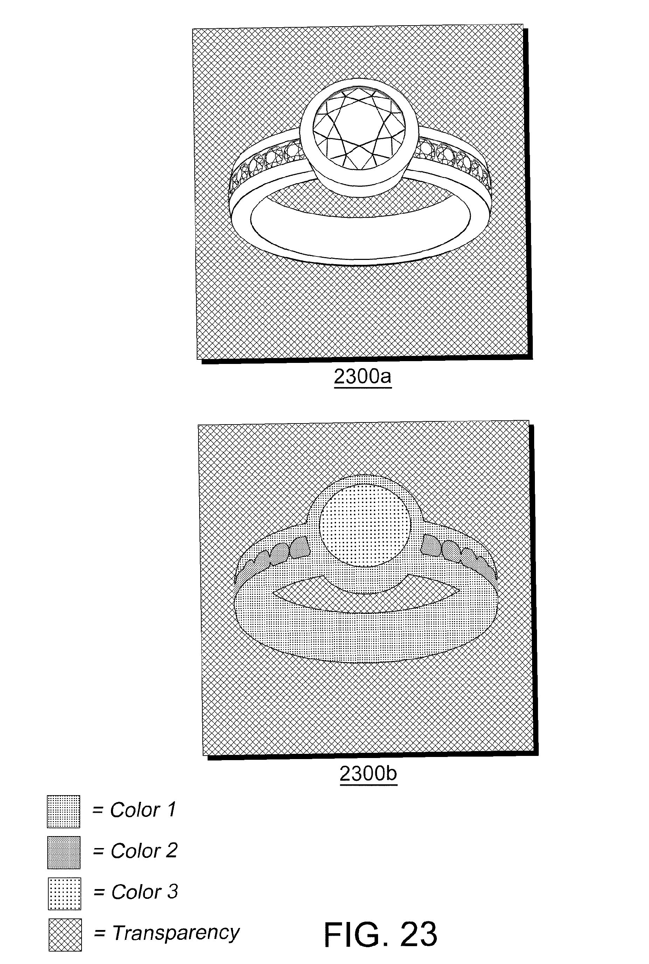

In one embodiment multi-pass rendering is employed. FIG. 21 displays a method 2100 for generating a render channel and a layer-id channel, which is performed by the rendering engine 501 of system 2200 (displayed in FIG. 22). FIG. 23 displays a render channel 2300a and a layer-id channel 2300b generated by system 2200. The render channel 2300a represents a 2D basic rendering of the product model 200, while the layer-id channel 2300b displays 2D colored silhouettes of each of its layers 204a-c.

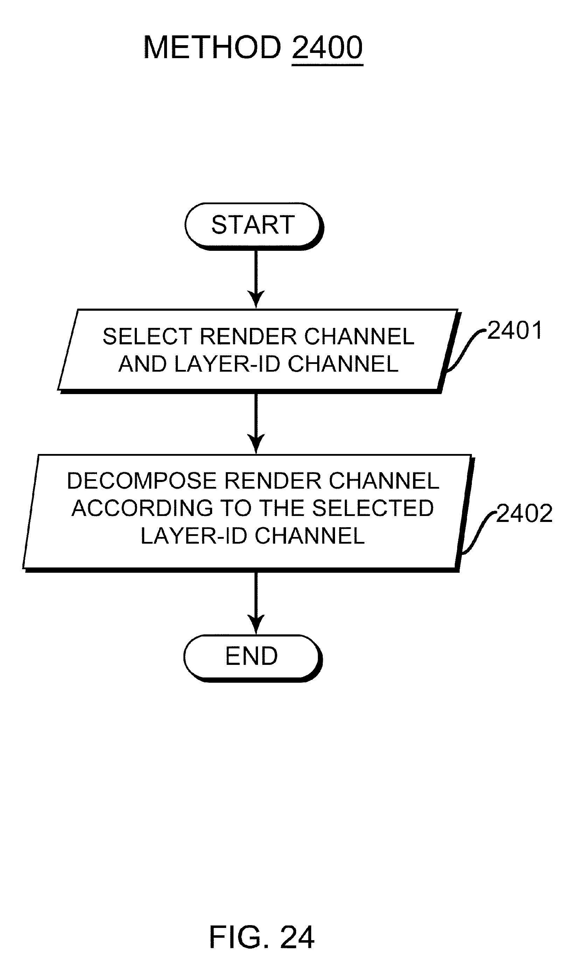

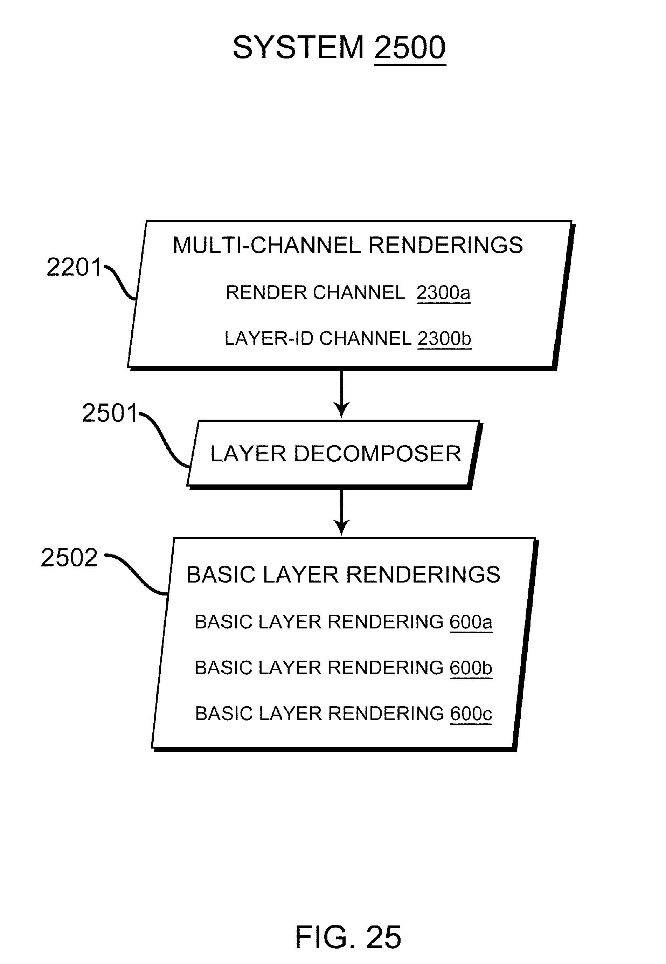

The layer-id channel can be utilized to decompose the render channel into different layer renderings by cropping areas of the render channel according to the colored areas of a corresponding layer-id channel and saving them as separate images. This method is used to generate basic layer renderings. In this case, a specific assignment of values to the layers of the render channel has to be considered. Such an assignment will assign an arbitrary color value to each customizable layer. This is not different to the assignment used for generating basic layer renderings. FIG. 24 displays a method 2400, performed by a layer decomposer 2501 of system 2500 (displayed in FIG. 25), which utilizes the layer-id channel 2300b and the render channel 2300a to generate the basic layer renderings 600a-c (displayed in FIG. 6). The decomposed basic layer renderings 600a-c can be processed with the same methods discussed above in order to display the personalized product view 1200 (FIG. 12).

In one embodiment further decomposition of the product is provided. Usually, there is more than one possible way to decompose a product into individually customizable parts. The parts 102a-b as well as 102d-e of product 100, for instance, cannot be customized individually, because they have each been grouped into one single layer. It might be desired, however, to give the customer or the user the chance to customize the parts 102a and 102b of product 100 individually. Such choices can be called "decompositions". The product model 200, for instance, has only three layers, offering a certain mid-sized decomposition. Offering another (larger or smaller) decomposition of product 100, however, would require a new set of basic layer renderings to be generated. Such efforts can be avoided with the help of layer-id channels.

The methods 2100 and 2400 allow generating a lot of different decompositions without the need of rendering a new set of basic layer renderings for every new decomposition of a product. The rendering engine is utilized to generate a set of layer-id channels representing different decompositions of a model.

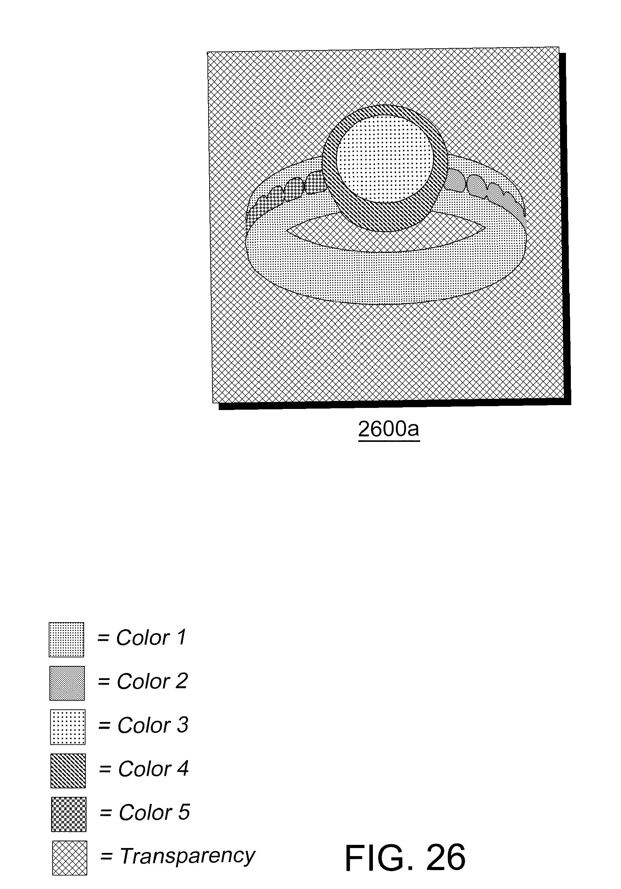

FIG. 26 displays the layer-id channel 2600a, reflecting an alternative decomposition of product model 200. The layer-id channel 2600a has different color representations for the shank 102a, the head 102b, the center stone 102c, the group of left side stones 102d, and the group of right side stones 102e. The layer decomposing system 2500 may utilize the layer-id channel 2600a together with the render channel 2300a to generate a new set of basic layer renderings, which will allow customizing the parts 102a-e individually. The method of decomposing one and the same render channel by different layer-id channels in order to generate different sets of basic layer renderings is an extremely powerful way of organizing a decomposition space and offering flexible decompositions of a certain product, because only one single basic rendering (i.e. a render channel) has to be generated for all possible decompositions.

In one embodiment an advanced post-processing system is employed. With an advanced post-processing system, basic layer renderings do not need to be created beforehand. Instead, a layer-id channel is used to directly manipulate the render channel. Moreover, the use of a layer decomposer system and a layer composer system are avoided. A layer-id channel displays the specific areas, which are influenced by the various layers of a 3D model, and thereby the various customizable parts of the represented product, with the help of a color map. Each area of a certain rendering, which is influenced by a certain layer, will get assigned a specific color. Such 2D color representations can be used to label different areas of a rendering. The labels previously assigned to the various layers of a model (such as "metal group 01", "gem group 01" and "gem group 02"), can easily be associated with different colors, representing areas influenced by the respective layers. This way, it is possible to label different (connected or unconnected) areas of a rendering of an entire model or some of its objects. Utilizing such labels, a customization request as an input for an advanced post-processor will have exactly the same format as a customization request utilized by post-processor 802 of system 800 (FIG. 8).

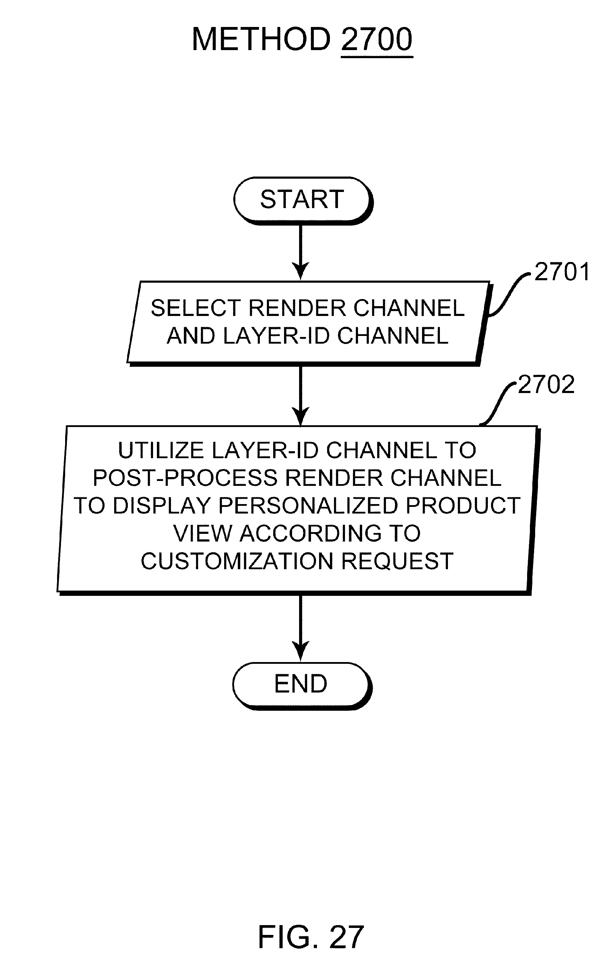

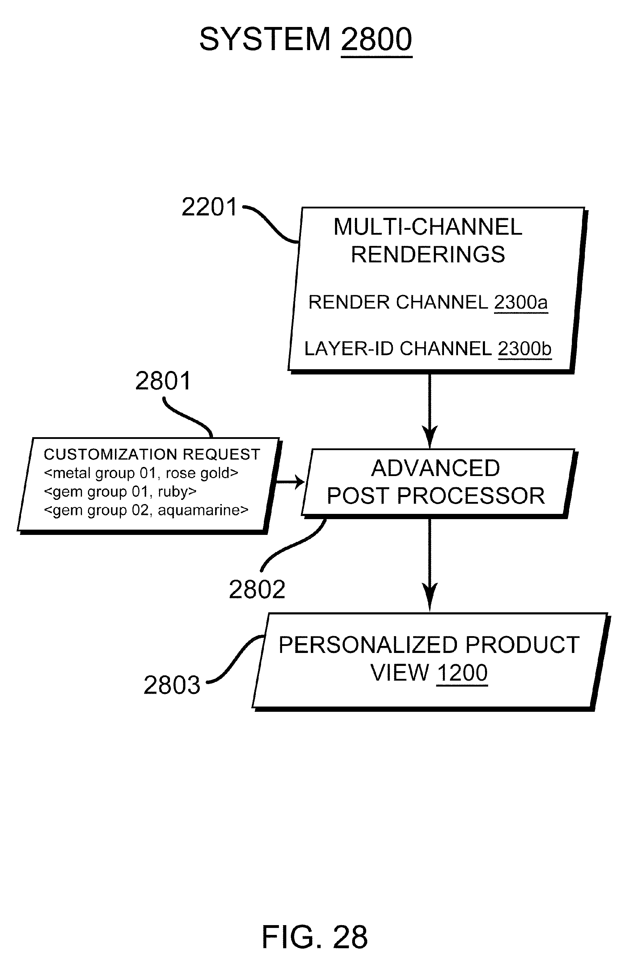

An advanced post-processor, therefore, maps desired areas of render channels onto target areas of final personalized product views, modifying the former in order to display a true representation of a customized product. FIG. 27 displays method 2700, which is performed by an advanced post-processor 2802 of system 2800 displayed in FIG. 28. The advanced post-processor 2802 utilizes the render channel 2300a and the layer-id channel 2300b. Following a customization request, it generates a personalized product view 1200 of the entire product, displayed in FIG. 12.

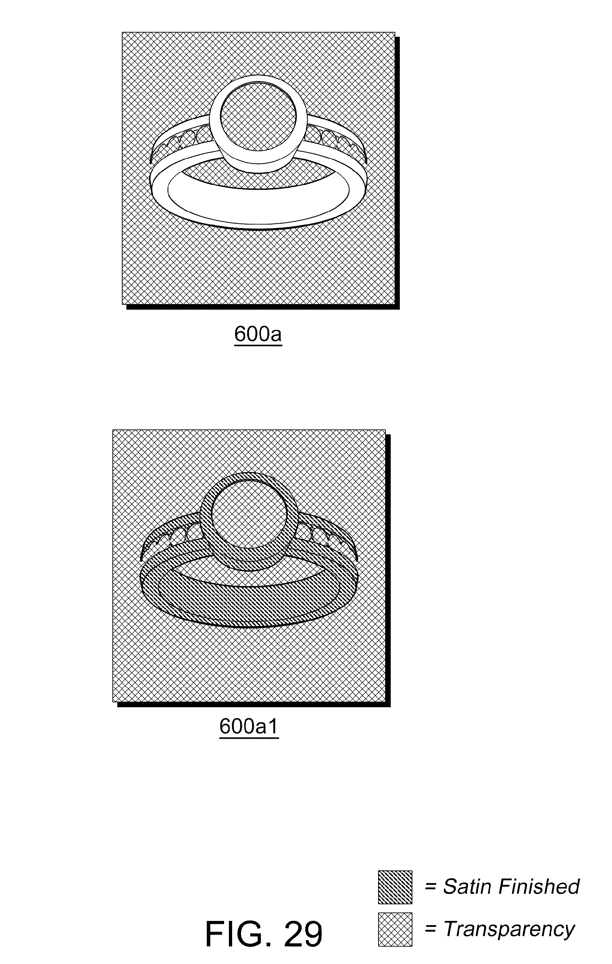

In one embodiment a plurality of basic layer renderings is generated for displaying different surface and/or volume properties of the layer of the model. Handling more than one basic layer rendering for a particular single layer requires an advanced labeling of basic layer renderings. The product model 200 of product 100, for instance, includes the metal layer 204a, which may be desired to be displayed with special surface properties like being polished or having a satin finish, each of which having additional color options. In such a case, it is possible to create two layer renderings, one representing polished metal, the other representing satin finished metal (both with an arbitrarily chosen color value). FIG. 29 illustrates the two basic layer renderings 600a and 600a1 (representing the polished and satin finished metal respectively). There are now two alternative basic layer renderings as possible inputs for a post-processor. This requires an advanced labeling of the involved basic layer renderings. The basic layer renderings 600a-c (FIG. 6), for example, can be assigned the labels "polished metal group 01", "gem group 01", and "gem group 02" respectively, while 600a1 (FIG. 29) can be assigned "satin metal group 01". Having assigned such labels, a customization request can be processed by the post-processor 802 (FIG. 8), and the resulting post-processed layer renderings can be utilized by the layer composer 1101 (FIG. 11) to display a personalized product view using the same methods as discussed above.

Some parts of a customizable product may have customization alternatives, which vary among each other with respect to more than one visually distinguishable property. Generating views of alternative customization variants would, therefore, require altering the respective customization space with respect to two or more different dimensions at the same time. Gemstones, for instance, cannot only be distinguished with respect to their color, but also with respect to their transparency. Some gemstones are fully transparent (such as aquamarine, citrine, or amethyst), some are semi-transparent (such as emerald, ruby, or fire opal), and others are almost or completely opaque (such as black spinel, or black diamond). If such different gemstones are required to be offered, two different values have to be modified at the same time: color and transparency. The 2D representation of transparency, however, is (partly) affected by the 3D properties of the respective gemstones, such as their volume and geometry. In such a case, it is possible to create multiple basic layer renderings, each representing a different transparency value and an arbitrarily chosen value for the "color" attribute type. The resulting multitude of basic layer renderings can be handled with the same methods as discussed above.

In one embodiment a sophisticated file naming for the layer renderings is employed. Each of the basic layer renderings may be encoded by the label of the layer along with additional information about which product, and which of its parts it belongs to. Such a file name may, for example, have a format such as:

<design name>-<layer label>-<view>.<extension>

Note that "<view>" represents the type of view of the layer rendering, such as front, side, or top view. For example, the filename "palrng007-metal_group_01-top.hdr" may be used to store a file containing a rendering of a product with the product id "palrng007", the layer label "metal_group_01", the view name "top", and the image file format type "hdr".

Similarly, the post-processed layer renderings may be encoded with the name of the layer along with the additional information about which product, and which attribute it belongs to. Such a file name may, for example, have a format such as:

<design_name>-<layer_label>-<attribute>-<view>.<extension>

For example, the filename "palrng007-metal_group_01-white_gold-top.hdr" may be used to store a file containing a post-processed rendering of a product with the product id "palrng007", the layer name "metal_group_01", the attribute name "white gold", the view name "top" and the image file format "hdr". This encoding scheme may be used to facilitate composing the post-processed layer renderings into the final personalized product view.

Similarly, the final personalized product view may be stored in a file having a file name, which encodes information about which layers are represented in the final personalized product view. In case of a ring with one metal and one stone part, for instance, a file name of the following form may be used:

<design_name>-<layer_name>-<attribute>-<layer_name>-<attribute>-<view>.<extension>

For example, the file name "palrng028-metal_group_01-platinum-stone_group_01-diamond-front.hdr" may be used for a ring with a product-id "palrng028", in which a platinum metal is combined with a diamond in a front view with the image file format "hdr".

In one embodiment pricing calculations are performed. It may be desired to display the price of a specific customized variant of the product. One possible way to calculate the price of a particular customized product (i.e., a personalized product reflecting a particular combination of attributes) is by storing the price for each alternative target attribute value of each layer in a price calculation engine, which may use the price associated with each attribute value for each layer (possibly in combination with information such as the current cost of particular types of gemstones, markup amounts, and discounts) to calculate the price of the entire customized product.

Pricing for a particular part of a product may be predetermined in any way, such as by calculating the price based on features (e.g., size, material) of the part, or simply by looking up the price of the part (such as by using the component's SKU as an index for a database). However the price is calculated, the resulting price may be displayed to the user client as part of or in addition to the personalized product view. As a result, the customer may select a particular set of attributes for each layer, and in response immediately see a photo-realistic personalized product view along with its associated price.

In one embodiment distributed computing is employed. The responsibilities for performing different steps in the process of displaying a personalized product view may be divided among various computing devices in a variety of ways. For example, in a client-server system:

(1) The server could pre-store all basic layer renderings by performing method 400 (or by utilizing method 2100 of producing multi-channel renderings together with method 2400 to generate basic layer renderings out of multi-channel renderings). When a user at one of the clients requests a personalized product view, the client could transmit the customization request to the server over a network defining the particular combination of target attributes. The server then produces post-processed layer renderings by performing method 700 and generates personalized product view by performing method 1000. The resulting personalized product view is transmitted directly to the client over a network to be displayed to the user.

(2) Yet another example, the server could pre-store all basic layer renderings by performing method 400 (or by utilizing method 2100 of producing multi-channel renderings together with method 2400 to generate basic layer renderings out of multi-channel renderings). When a user at one of the clients requests a personalized product view, the client could transmit the customization request to the server over a network defining the particular combination of target attributes. The server then produces post-processed layer renderings by performing method 700. The resulting post-processed layer renderings are transferred to the client over a network. Then the client generates the personalized product view by performing method 1000 to display the personalized product view to the user.

(3) Yet another example, the server could produce basic layer renderings by performing method 400 (or by utilizing method 2100 of producing multi-channel renderings together with method 2400 to generate basic layer renderings out of multi-channel renderings), and produce post-processed layer renderings by performing method 700 for all possible combination of target attributes. Then, the server may perform a one-time transmission of all of the post-processed layer renderings to each of the clients. Then, when a user at a particular client makes a customization request for a particular combination of attributes, the client may perform the method 1000 to display the personalized product view to the user.

(4) Yet another example, the server could produce basic layer renderings by performing method 400 (or by utilizing method 2100 of producing multi-channel renderings together with method 2400 to generate basic layer renderings out of multi-channel renderings), and produce post-processed layer renderings by performing method 700 for all possible combinations of target attributes. When a user at one of the clients requests a personalized product view, the client could transmit the customization request to the server over a network defining the particular combination of target attributes. The server then generates personalized product view performing method 1000 by utilizing only the necessary pre-stored post-processed layer renderings. The resulting personalized product view is transmitted directly to the client over a network to be displayed to the user.

(5) Yet another example, the server could pre-store all basic layer renderings by performing method 400 (or by utilizing method 2100 of producing multi-channel renderings together with method 2400 to generate basic layer renderings out of multi-channel renderings). When a user at one of the clients requests a personalized product view, the client could transmit the customization request to the server over a network defining the particular combination of target attributes. Then the server transfers basic layer renderings to the client over a network. The client could then produce post-processed layer renderings by performing method 700, and generate the personalized product view by performing method 1000 to be displayed to the user. As the client stores all basic layer renderings, the next customization request could be processed directly on the client without going back to the server.

(6) Yet another example, the server may perform a one-time transmission of all of the basic layer renderings produced with method 400 (or by utilizing method 2100 of producing multi-channel renderings together with method 2400 to generate basic layer renderings out of multi-channel renderings) to each of the clients. Then, when a user at a particular client executes a customization request for a particular combination of target attributes, the client may perform the method 700 and 1000 to display the personalized product view to the user.

(7) Yet another example, the server could pre-store all possible alternatives of a customizable product by performing method 400 (or by utilizing method 2100 of producing multi-channel renderings together with method 2400 to generate basic layer renderings out of multi-channel renderings), method 700 (followed by pre-computing each possible customization request), and method 1000. When a user at one of the clients requests a personalized product view, the client could transmit the customization request for a particular combination of target attributes to the server over a network defining the particular combination of target attributes. In response, the server could transmit the specific personalized product view to the client over network to be displayed to the user.

(8) Yet another example, the server could pre-store multi-channel renderings by performing method 2100. When a user at one of the clients requests a personalized product view, the client could transmit the customization request to the server over a network defining the particular combination of target attributes. The server then performs method 2700 to generate the personalized product view. The resulting personalized product view is transmitted directly to the client over a network to be displayed to the user.

(9) Yet another example, the server could pre-store multi-channel renderings by performing method 2100. When a user at one of the clients requests a personalized product view, the client could transmit the customization request to the server over a network defining the particular combination of target attributes. Then the server transfers the multi-channel renderings to the client over a network. The client could then directly display the personalized product view to the user by performing method 2700. As the client stores all multi-channel renderings, the next customization request could be directly processed by the client without going back to the server.

(10) Yet another example, the server may perform a one-time transmission of all of the multi-channel renderings produced with method 2100 to each of the clients. When a user at a particular client makes a customization request for a particular combination of target attributes, the client may then perform method 2700 to display the personalized product view to the user.

The methods (1-10) of allocating responsibilities described above have been explained with respect to only one system per client and server. However, this is not a limitation of the invention. A server and a client may have a plurality of subsystems performing a plurality of methods. For example, a server may have a plurality of subsystems which may perform different operations (for example, the method 400 may be performed by the first subsystem, method 700 may be performed by the second subsystem, and method 1000 may be performed by the third subsystem). The resulting personalized product view may be transmitted directly from the third subsystem of the server to the client over a network to be displayed to the user.

Although the various methods (1-10) of allocating responsibilities (for a server-client system) have been described as methods for displaying a single view of a personalized product view, they are also applicable for displaying a sequence of personalized product views used for displaying an animated stream of renderings to the client.

In any of these methods (1-10), the client does not need to perform the computationally-intensive basic layer rendering process 400. The client computer may, therefore, be a relatively low-end computer, such as the kind typically used by home computer users, having a conventional web browsing client but lacking the CAD software and other software necessary to perform the layer-rendering process 400.

Once a particular personalized product view is produced, whether by a client or a server, the personalized product view may be cached so that it may be displayed in response to subsequent requests for the same combination of target attributes, without the need to re-perform method 700 and 1000. If personalized product views are created at the server, then such caching may be performed at the server. Additionally or alternatively, the server may transmit such personalized product views to one or more of the clients, so that subsequent requests at those clients may be serviced quickly, without the need to go back to the server. If the personalized product views are generated by the client, then such caching may be performed at each client. Additionally or alternatively, each client may transmit any generated personalized product view back to the server, so that subsequent requests made by the same or other clients may be serviced without the need to regenerate the same personalized product view.

Distributing processing time and efforts among several systems, each suited for a different task, will establish effective and flexible methods for generating views of millions of alternatives of a customizable product. This is true especially because a rendering engine will only produce basic renderings, which are undefined with respect to the customizable attributes. This feature increases the productivity, because it divides the work between producing basic renderings, which define the properties to be held constant with respect to a certain customization space, and manipulating those renderings by a post-processor, which utilizes entries of algorithms that can be reused for many or all items of a certain portfolio of similar products. This will, at the same time, reduce rendering efforts as well as efforts needed to enlarge the customization space with respect to single products or entire portfolios of similar products.

The methods discussed herein minimize rendering time and efforts. The numbers of renderings to be generated vary greatly with respect to different methods used. Specifically, if $n_i^k$ refers to the $k^{th}$ permissible attribute value on layer "i" and "m" refers to the total number of customizable layers (with respect to a certain decomposition), then the method of producing each alternative for each layer representing an individually customizable part of a product (described in US 8,194,069 B2), the method of post-processing basic layer renderings described herein (method 400 together with method 1000), and the method of post-processing render channels described herein (method 2100 together with method 2400), requires to render the following number of pictures:

method of US 8,194,069 B2:

$$\sum_{i=1}^{i=m} \sum_{k} n_i^k \, 2D$$

method 400 and 1000: m
method 2100 and 2400: 2
in order to produce:

$$\prod_{i=1}^{i=m} \prod_{k} n_i^k$$

possible personalized product views. Utilizing methods 400 together with 1000 or 2100 together with 2400 will significantly reduce the number of renderings to be performed.

The methods described herein not only minimize rendering efforts, but are advantageous especially with respect to expansions of a given customization space, because the table of algorithms utilized by a post-processor can have many entrances of applicable target values; and any such entry can be pre-stored and utilized later on. This results in a flexibility to display almost every possible attribute without the need of re-rendering anything again. As there is no upper limit for storing such entries, the number of customization options has (theoretically) no upper limit for a given set of basic layer renderings (or a given pair of render channel and layer-id channel).

Entries, which are used by a post-processor, are global instructions. Such entries can, therefore, be reused for any product within a portfolio of different, but similar products. Enlarging an entire portfolio of products with one or more additional attributes, for instance, can be done by just adding one or more entries to the store of a suitable post-processor system. No additional rendering effort is required. Using the method described in US 8,194,069 B2, however, the rendering efforts to be undertaken to enlarging a portfolio of similar products can be enormous.

Different decompositions with respect to a product offered for customization can be managed easily. By exploiting layer-id channels, it is possible to decompose a certain product in many ways, without the need for generating any new basic layer rendering. This is an effective way of offering various decomposition options to the user or customer.

Utilizing the client as a post-processor and layer composer allows to display various personalized product views instantly, without re-loading new renderings for each new customization request. The processed layer renderings can be displayed without merging them before they are sent to the client. This saves processing time with respect to changing customization requests and enhances user experience.

Another advantage of displaying uncombined layers is that the image modifications have only to be applied to the layer for which a new customization request is received. Imagine the user first requested the part 104a of product 100 to be rose gold, the part 104b to be ruby, and the part 104c to be aquamarine. This request will be processed by a post-processor at the client. If the user at the client wants to re-customize the part 104b later to be blue sapphire (replacing ruby), only the basic layer rendering 600b would have to be modified, without affecting the already post-processed layer renderings 900a and 900c. This will save the time of re-processing all individual layers for each new customization request.

Uncombined processed layer renderings can be utilized for animations too. Pre-producing an animation without a post-processor will involve a lot of processing time and efforts, because it would be necessary to generate an entire sequence of personalized product views while processing a certain customization request. Instead of pre-producing each of a multitude of renderings needed for an animation, just one single sequence of basic layers has to be generated. The post-processor could work on the device of the user and will process the respective algorithms in order to display animated streams of representations, displaying the correct target properties according to a certain customization demand. Applying the entries of a post-processor system to a preloaded animation consisting of sequences of uncombined basic layer renderings will result in time and cost effective processing each customization request.

Each layer may consist of a sequence of basic layer renderings, which can be stored as a single basic layered animation (carrying certain video compression codecs with transparency support). The resulting plurality of basic layered animations can be post-processed directly on the device of the client (according to a customization request), and can be utilized by a layer composer without combining them beforehand to display a customized product animation. If a new customization is requested, the post-processing is directly applied on the client's device, without interrupting an existing running customized product animation, and without reloading any new data from the server. The post-processor utilizes simple algorithms of color transformations which do not require computationally intensive processes with the advantage of enhanced user experience while watching customized streams of animated products.

The particular term "product" has been used to describe various methods of this invention. The scope of this invention, however, is not limited only to products and may be applicable to any other entity by not limiting the scope of the claims. For example, an architectural 3D model representing an interior scene of a kitchen can also be customized with the current embodiments.

It is to be understood that, although the invention has been described in terms of particular embodiments, the foregoing embodiments are provided as illustrative only, and do not limit or define the scope of the invention. Various other embodiments, including but not limited to the following, are also within the scope of the claims.

(a) For example, elements and parts described herein may be further divided into additional parts or joined together to form fewer parts for performing the same functions.

(b) Another example, although particular embodiments of the present invention are described in connection with jewelry, the same techniques may be applied to any kind of product.

(c) Yet another example, three dimensional geometry data of a product processed by embodiments of the present invention may be stored in any form. Three-dimensional design data may be stored in CAD files, which may be subdivided into any number of files, such as one file per design, one file per layer, or one file per object.

(d) Yet another example, the assignment 300 (FIG. 3) utilizes a certain combination of attributes (with associated types and corresponding values) assigned to each layer L in order to render the layer L for producing basic layer renderings. The specific setup of such an assignment is not a requirement of the present invention.

(e) Yet another example, the method 400 displayed in FIG. 4 may produce layer renderings for each layer by assigning more than one attributes to any of the layers, which may result in a plurality of basic layer renderings for each layer.

(f) Yet another example, the customization request 801 displayed in FIG. 8 refers to a certain combination of attributes in order to post-process the basic layer renderings to generate post-processed layer renderings. The specific setup of such a customization request is not a requirement of the present invention.

(g) Yet another example, the post-processor 802 (FIG. 8) as well as the advanced post-processor 2802 (FIG. 28) may utilize one or more algorithms (e.g. colorize, hue, saturation, contrast, brightness) and thereby one or more values following a customization request. The Table-1 displayed above carries a set of values with respect to certain sets of algorithms with respect to some specific attributes. The particular values within the table are not a requirement of the present invention. The values for a set of algorithms for each specific attribute can be added, modified and removed from the table.

(h) Yet another example, the method 2100, 2400, 2700 of FIG. 21, 27 and 27 respectively, may produce a plurality of multi-channel renderings, which may include render, alpha, atmosphere, diffuse, reflection, refraction, GI, object-id, etc. channels.

(i) Yet another example, although only a single product model 200 is shown in FIG. 2, the techniques disclosed herein may be used in systems including any number of models. For example, an online retail web site may allow a user to select any one of a plurality of products, such as any one of a plurality of items of jewelry, and then customize the selected product using the techniques disclosed herein.

(j) Yet another example, although the methods described herein are considering only color transformation techniques, the invention is not limited to such techniques, but can include any techniques, which will allow defining coherent transformation algorithms with respect to 2D representations.

The methods described above may be implemented, for example, in hardware, software tangibly stored on a computer-readable medium, firmware, or any combination thereof. They may be implemented in one or more computer programs executing on a programmable computer including a processor, a storage medium readable by the processor (including, for example, volatile and nonvolatile memory and/or storage elements), at least one input device, and at least one output device. Program codes may be applied to input entered using the input device to perform the functions described and to generate an output. The output may be provided to one or more output devices.

Each computer program within the scope of the claims below may be implemented in any programming language, such as assembly language, machine language, a high-level procedural programming language, or an object-oriented programming language. The programming language may, for example, be a compiled or interpreted programming language.

Each such computer program may be implemented in a computer program product tangibly embodied in a machine-readable storage device for execution by a computer processor. Method steps of the invention may be performed by a computer processor executing a program tangibly embodied on a computer-readable medium to perform functions of the invention by operating on input and generating output. Suitable processors include, by way of example, both general and special purpose microprocessors. Generally, the processor receives instructions and data from a read-only memory and/or a random access memory. Storage devices suitable for tangibly embodying computer program instructions include, for example, all forms of nonvolatile memory, such as semiconductor memory devices, including EPROM, EEPROM, and flash memory devices; magnetic disks such as internal hard disks and removable disks; magnetooptical disks; and CD-ROMs. Any of the foregoing may be supplemented by, or incorporated in, specially-designed ASICs (Application-Specific Integrated Circuits) or FPGAs (Field-Programmable Gate Arrays). A computer can generally also receive programs and data from a storage medium such as an internal disk (not shown) or a removable disk. These elements will also be found in a conventional desktop or workstation computer as well as other computers suitable for executing computer programs implementing the methods described herein, which may be used in conjunction with any digital print engine or marking engine, display monitor, or other raster output device capable of producing color or gray scale pixels on paper, film, display screen, or other output medium.

The method according to the present invention can be implemented as computer program comprising computer-readable computer program instructions, tangibly stored on a first non-transitory computer readable medium, for execution by a computer processor to perform said method. It may distributed for instance via Internet or as smart phone application.

**Claims**

1. Method for generating personalized views from a three-dimensional computer model representing a customizable product, said model comprising a plurality of layers, each layer representing an individually customizable part of the product, each layer of the plurality of layers being assigned at least one attribute, wherein the model is rendered with a rendering machine and the resulting renderings of the model are customized according to a customization request with a post-processing algorithm, said customization request specifying custom attribute values for each attribute of each layer of the plurality of layers.

2. The method according to claim 1, the method comprising:

(a) assigning an arbitrarily chosen attribute value to each attribute type;
(b) producing basic layer renderings for each layer of the model according to the assigned attribute values;

(c) receiving a customization request for a customized rendering of a personalized product specifying a plurality of custom attribute values for each layer;

(d) modifying the basic layer renderings according to the customization request to produce post-processed layer renderings;

(e) composing a personalized view from the post-processed layer renderings.

3. The method according to claim 2, wherein a render channel (a true rendering) and a layer-id channel (a multi-colored 2D representation of layer's silhouettes) are produced, and wherein the layer-id channel is used to crop the said render channel into basic layer renderings.

4. The method according to claim 1, wherein a render channel is produced by rendering the model with an assignment of arbitrarily specified attribute values, wherein a layer-id channel is produced, and wherein the layer-id channel is used for layer wise customizing the render channel by directly manipulating the render channel with an advanced post-processing algorithm according to the customization request.

5. The method according to any of claims 2 to 3 or 4, wherein the basic layer renderings or the render channel are post-processed by applying transformation algorithms with the help of a table storing values for transformation parameters for each attribute associated with a layer.

6. The method according to any of claims 2 to 5, wherein modifying the basic layer renderings or modifying the render channel comprises applying special effects like bloom, glare and lens flare to each layer.

7. The method according to any of claims 1 to 6, wherein the model is augmented by an optional part, and wherein the representation of the optional part may or may not be included in the personalized product view.

8. The method according to any of claim 2 to 7, wherein an additional basic layer rendering representing shadow effects or a render channel with shadow effects is produced by augmenting the model with a 3D object (a ground plane), and wherein a plurality of basic layer renderings are merged or linked, or wherein various areas of a render channel are linked to each other.

9. The method according to claim 7 or 8, wherein separate basic layer renderings representing the shadow effects are generated and post-processed, and wherein said separate post-processed layer renderings are composited.

10. The method according to any of claims 2 to 3, and 5 to 9, wherein a plurality of basic layer renderings are produced for each layer, said plurality of basic layer renderings representing a plurality of dimensions of the customization space.

11. The method according to any of claims 2 to 10, wherein the basic layer renderings or the render channel is modified by a post-processor using a pre-generated 2D map.

12. The method according to any of claims 1 to 11, wherein a virtual fly-by or animation is produced by sequentially displaying the personalized product out from series of pre-computed personalized product views, wherein said virtual fly-by may comprise single or multi customization options of the product from various spatial views.

13. The method according to any of claims 1 to 3, and 5 to 12, wherein the personalized view is composed by displaying uncombined or combined customized layers.

14. The method according to any of claims 2 to 13, wherein the basic layer renderings or the render channel (together with a layer-id channel) are pre-generated on a device of a vendor, and are provided to an external interface; said interface being accessible by a device of the client and wherein the basic layer renderings or the render channel (together with a layer-id channel) of the product are manipulated directly on a device of the client to display the personalized product view

or

wherein the basic layer renderings or the render channel (together with a layer-id channel) are pre-generated on the device of a vendor and an external interface is provided; said interface being accessible by a device of the client and wherein the client sends the customization request through the interface, the basic layer renderings or the render channel (together with a layer-id channel) of the product are manipulated on the device of the vendor and wherein the resulting personalized product view will be sent back to the device of the client through an interface.

**15.** The method according to any of claims 1 to 14, wherein sequences of basic layer renderings are pre-generated and stored on the device of a vendor, and are provided to an external interface; said interface being accessible by a client, and wherein the sequence of basic layer renderings is post-processed and composed directly on the device of the client.

**16.** The method according to any of claims 1 to 15, wherein a price is calculated and displayed along with a personalized product view or animated stream according to a customization request.

**Amended claims in accordance with Rule 137(2) EPC.**

**1.** Method for generating personalized views from a three-dimensional computer model representing a customizable product, said model comprising a plurality of layers, each layer representing an individually customizable part of the product, each layer of the plurality of layers being assigned at least one attribute, wherein the model is rendered with a rendering machine and the resulting renderings of the model are customized according to a customization request for a customized rendering of a personalized product with a post-processing algorithm, said customization request specifying custom attribute values for each attribute of each layer of the plurality of layers, wherein the resulting renderings comprise basic layer renderings or a render channel together with a layer-id channel; and wherein the basic layer renderings or the render channel together with a layer-id channel are pre-generated on a device of a vendor, and are provided to an external interface; said interface being accessible by a device of the client and wherein the basic layer renderings or the render channel together with a layer-id channel of the product are manipulated directly on a device of the client to display the personalized product view or
wherein the basic layer renderings or the render channel together with a layer-id channel are pre-generated on the device of a vendor and an external interface is provided; said interface being accessible by a device of the client and wherein the client sends the customization request through the interface, the basic layer renderings or the render channel together with a layer-id channel of the product are manipulated on the device of the vendor and wherein the resulting personalized product view will be sent back to the device of the client through an interface.

**2.** The method according to claim 1, the method comprising:

(a) assigning an arbitrarily chosen attribute value to each attribute type;
(b) producing basic layer renderings for each layer of the model according to the assigned attribute values;
(c) receiving a customization request for a customized rendering of a personalized product specifying a plurality of custom attribute values for each layer;
(d) modifying the basic layer renderings according to the customization request to produce post-processed layer renderings;
(e) composing a personalized view from the post-processed layer renderings.

**3.** The method according to claim 2, wherein a render channel (a true rendering) and a layer-id channel (a multi-colored 2D representation of layer's silhouettes) are produced, and wherein the layer-id channel is used to crop the said render channel into basic layer renderings.

**4.** The method according to claim 1, wherein a render channel is produced by rendering the model with an assignment of arbitrarily specified attribute values, wherein a layer-id channel is produced, and wherein the layer-id channel is used for layer wise customizing the render channel by directly manipulating the render channel with an advanced post-processing algorithm according to the customization request.

**5.** The method according to any of claims 2 to 3 or 4, wherein the basic layer renderings or the render channel are post-processed by applying transformation algorithms with the help of a table storing values for transformation parameters for each attribute associated with a layer.

**6.** The method according to any of claims 2 to 5, wherein modifying the basic layer renderings or modifying the render channel comprises applying special effects like bloom, glare and lens flare to each layer.

**7.** The method according to any of claims 1 to 6, wherein the model is augmented by an optional part, and wherein the representation of the optional part may or may not be included in the personalized product view.

**8.** The method according to any of claim 2 to 7, wherein an additional basic layer rendering representing shadow effects or a render channel with shadow effects is produced by augmenting the model with a 3D object (a ground plane), and wherein a plurality of basic layer renderings are merged or linked, or wherein various areas of a render channel are linked to each other.

**9.** The method according to claim 7 or 8, wherein separate basic layer renderings representing the shadow effects are generated and post-processed, and wherein said separate post-processed layer renderings are composited.

**10.** The method according to any of claims 2 to 3, and 5 to 9, wherein a plurality of basic layer renderings are produced for each layer, said plurality of basic layer renderings representing a plurality of dimensions of the customization space.

**11.** The method according to any of claims 2 to 10, wherein the basic layer renderings or the render channel is modified by a post-processor using a pre-generated 2D map.

**12.** The method according to any of claims 1 to 11, wherein a virtual fly-by or animation is produced by sequentially displaying the personalized product out from series of pre-computed personalized product views, wherein said virtual fly-by may comprise single or multi customization options of the product from various spatial views.

**13.** The method according to any of claims 1 to 3, and 5 to 12, wherein the personalized view is composed by displaying uncombined or combined customized layers.

**14.** The method according to any of claims 1 to 13, wherein sequences of basic layer renderings are pre-generated and stored on the device of a vendor, and are provided to an external interface; said interface being accessible by a client, and wherein the sequence of basic layer renderings is post-processed and composed directly on the device of the client.

**15.** The method according to any of claims 1 to 14, wherein a price is calculated and displayed along with a personalized product view or animated stream according to a customization request.

100

102a    102b

104a

102c

104b

102d    102e

104c

FIG. 1

# MODEL 200

### LAYER 204a

OBJECT 202a

OBJECT 202b

### LAYER 204b

OBJECT 202c

### LAYER 204c

OBJECT 202d

OBJECT 202e

# FIG. 2

# ASSIGNMENT 300

## LAYER 204a

OBJECT 202a

OBJECT 202b

### ATTRIBUTE 306a

TYPE 300a

VALUE 301a

TYPE 300b

VALUE 302a

## LAYER 204b

OBJECT 202c

### ATTRIBUTE 306b

TYPE 300a

VALUE 301b

TYPE 300b

VALUE 302b

TYPE 300c

VALUE 303b

## LAYER 204c

OBJECT 202d

OBJECT 202e

### ATTRIBUTE 306c

TYPE 300a

VALUE 301c

TYPE 300b

VALUE 302c

TYPE 300c

VALUE 303c

## FIG. 3

# METHOD 400

```
        ┌─────────────┐
        │   START     │
        └──────┬──────┘
               │
               ▼
   ┌──────────────────────┐        ╭─ 401
   │  FOR EACH LAYER L     │
   └──────────┬───────────┘
              │
              ▼
   ┌──────────────────────┐        ╭─ 402
   │  PRODUCE BASIC LAYER  │
   │ RENDERINGS ACCORDING TO│
   │   AN ASSIGNEMENT       │
   └──────────┬───────────┘
              │
              ▼
   ┌──────────────────────┐        ╭─ 403
   │    END LOOP L         │
   └──────────┬───────────┘
              │
              ▼
        ┌─────────────┐
        │    END      │
        └─────────────┘
```

FIG. 4

# SYSTEM <u>500</u>

PRODUCT MODEL <u>200</u> — 200

RENDER ENGINE — 501

BASIC LAYER RENDERINGS

BASIC LAYER RENDERING <u>600a</u>

BASIC LAYER RENDERING <u>600b</u> — 502

BASIC LAYER RENDERING <u>600c</u>

# FIG. 5

600a

600b

600c

= Transparency

FIG. 6

# METHOD 700

START

SELECT EACH BASIC
LAYER RENDERING ⌇701

POST-PROCESS SELECTED BASIC
LAYER RENDERINGS ACCORDING
TO CUSTOMIZATION REQUEST ⌇702

END

## FIG. 7

# SYSTEM 800

602 —

**BASIC LAYER RENDERINGS**

BASIC LAYER RENDERING 600a

BASIC LAYER RENDERING 600b

BASIC LAYER RENDERING 600c

801

**CUSTOMIZATION REQUEST**
<metal group 01, rose gold>
<gem group 01, ruby>
<gem group 02, aquamarine>

**POST PROCESSOR**

802

803 —

**POST-PROCESSED LAYER RENDERINGS**

POST-PROCESSED LAYER RENDERING 900a

POST-PROCESSED LAYER RENDERING 900b

POST-PROCESSED L LAYER RENDERING 900c

# FIG. 8

900a

900b

900c

= Transparency

FIG. 9

# METHOD <u>1000</u>

START

↓

SELECT POST-PROCESSED LAYER RENDERING FOR EACH LAYER — 1001

↓

COMPOSE SELECTED POST-PROCESSED LAYER RENDERINGS TO DISPLAY A PERSONALIZED PRODUCT VIEW — 1002

↓

END

## FIG. 10

# SYSTEM <u>1100</u>

803 —

**POST-PROCESSED LAYER RENDERINGS**

POST-PROCESSED
LAYER RENDERING <u>900a</u>

POST-PROCESSED
LAYER RENDERING <u>900b</u>

POST-PROCESSED L
LAYER RENDERING <u>900c</u>

1101 —

**LAYER COMPOSER**

1102 —

**PERSONALIZED PRODUCT
VIEW <u>1200</u>**

# FIG. 11

1200

= Transparency

FIG. 12

FIG. 13

600d

▦ = Shadow effect

▨ = Transparency

FIG. 14

600a

600d

600ad

▦ = Shadow effect

▨ = Transparency

FIG. 15

1600

▦ = Shadow effects     FIG. 16

1700a

1700b

1700c

1700d

1700e

1701f

= Shadow Effects

= Transparency

FIG. 17

1800a

1800b

▨ = Transparency

FIG. 18

1900a

1900c

= Shadow Effects

FIG. 19

2000a

2000b

2000c

2000d

2000e

2000f

2000g

2000h

2000i

2000j

2000k

2000l

FIG. 20

# METHOD <u>2100</u>

START

PRODUCE RENDER CHANNEL &
LAYER-ID CHANNEL ACCOURDING
TO AN ASSIGNMENT

2101

END

FIG. 21

# SYSTEM 2200

PRODUCT
MODEL 200 — 200

RENDER
ENGINE — 501

MULTI CHANNEL RENDERINGS

RENDER CHANNEL 2300a

LAYER-ID CHANNEL 2300b

— 2201

# FIG. 22

2300a

2300b

= Color 1

= Color 2

= Color 3

= Transparency

# FIG. 23

# METHOD <u>2400</u>

START

SELECT RENDER CHANNEL
AND LAYER-ID CHANNEL — 2401

DECOMPOSE RENDER CHANNEL
ACCORDING TO THE SELECTED
LAYER-ID CHANNEL — 2402

END

# FIG. 24

# SYSTEM 2500

2201 — **MULTI-CHANNEL RENDERINGS**

RENDER CHANNEL 2300a

LAYER-ID CHANNEL 2300b

2501 — LAYER DECOMPOSER

2502 — **BASIC LAYER RENDERINGS**

BASIC LAYER RENDERING 600a

BASIC LAYER RENDERING 600b

BASIC LAYER RENDERING 600c

## FIG. 25

2600a

| | |
|---|---|
| | = Color 1 |
| | = Color 2 |
| | = Color 3 |
| | = Color 4 |
| | = Color 5 |
| | = Transparency |

FIG. 26

# METHOD 2700

START

SELECT RENDER CHANNEL AND LAYER-ID CHANNEL —2701

UTILIZE LAYER-ID CHANNEL TO POST-PROCESS RENDER CHANNEL TO DISPLAY PERSONALIZED PRODUCT VIEW ACCORDING TO CUSTOMIZATION REQUEST —2702

END

FIG. 27

# SYSTEM <u>2800</u>

2201 —

**MULTI-CHANNEL RENDERINGS**

RENDER CHANNEL <u>2300a</u>

LAYER-ID CHANNEL <u>2300b</u>

2801

**CUSTOMIZATION REQUEST**
<metal group 01, rose gold>
<gem group 01, ruby>
<gem group 02, aquamarine>

**ADVANCED POST PROCESSOR**

2802

**PERSONALIZED PRODUCT VIEW <u>1200</u>**

2803

# FIG. 28

600a

600a1

# FIG. 29

■ = Satin Finished

■ = Transparency

Europäisches
Patentamt

European
Patent Office

Office européen
des brevets

**EUROPEAN SEARCH REPORT**

Application Number

EP 12 18 7256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jeremy Birn: "Lighting & Rendering", July 2000 (2000-07), New Riders Publishing, USA, XP002694549, ISBN: 1-56205-954-8 pages 253-256, * the whole document * | 1-16 | INV. G06T15/50 |

-----

TECHNICAL FIELDS
SEARCHED (IPC)

G06T

The present search report has been drawn up for all claims

| Place of search | Date of completion of the search | Examiner |
|---|---|---|
| Berlin | 27 March 2013 | Kulak, Eray |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8194069 B2